# EUROPÄISCHE PATENTSCHRIFT

(11) **EP 2 661 806 B1**
(45) Veröffentlichungstag und Bekanntmachung des Hinweises auf die Patenterteilung: **26.11.2014**
(21) Anmeldenummer: 13707551.1
(22) Anmeldetag: 28.02.2013
(51) Int. Cl.: H02M 7/483

(54) **ELEKTRISCHE SCHALTUNG UND VERFAHREN ZU DEREN BETRIEB**
ELECTRICAL CIRCUIT AND METHOD FOR OPERATION THEREOF
CIRCUIT ÉLECTRIQUE ET PROCÉDÉ SERVANT À FAIRE FONCTIONNER LEDIT CIRCUIT ÉLECTRIQUE

(30) Priorität: 23.03.2012 DE 102012005974
(43) Veröffentlichungstag der Anmeldung: 13.11.2013
(73) Patentinhaber: TQ-Systems GmbH, 82229 Seefeld (DE)
(72) Erfinder: STAHL, Rüdiger, 82211 Herrsching (DE); LICHTE, Alexander, 82327 Tutzing (DE)
(74) Vertreter: Grättinger Möhring von Poschinger Patentanwälte Partnerschaft
(86) Internationale Anmeldenummer: PCT/EP2013/000583
(87) Internationale Veröffentlichungsnummer: WO 2013/139430

(56) Entgegenhaltungen:
- JIH-SHENG LAI ET AL: "Multilevel Converters-A New Breed of Power Converters", IEEE TRANSACTIONS ON INDUSTRY APPLICATIONS, IEEE SERVICE CENTER, PISCATAWAY, NJ, US, Bd. 32, Nr. 3, 1. Juni 1996 (1996-06-01), XP011022014, ISSN: 0093-9994
- CHUNMEI FENG ET AL: "Modified Phase-Shifted PWM Control for Flying Capacitor Multilevel Converters", IEEE TRANSACTIONS ON POWER ELECTRONICS, IEEE SERVICE CENTER, PISCATAWAY, NJ, US, Bd. 22, Nr. 1, 1. Januar 2007 (2007-01-01) , Seiten 178-185, XP011154526, ISSN: 0885-8993, DOI: 10.1109/TPEL.2006.886600 in der Anmeldung erwähnt
- S.J. WATKINS ET AL: "Modelling and Control of a Flying-Capacitor Inverter", 9TH EUROPEAN CONFERENCE ON POWER ELECTRONICS AND APPLICATIONS. EPE 2001, 1. Januar 2001 (2001-01-01), XP055063875, Brussels, Belgium in der Anmeldung erwähnt

## Beschreibung

Die vorliegende Erfindung betrifft ein Verfahren zum Betrieb einer elektrischen Schaltung in Art einer Multilevel-Halbbrücke sowie eine zur Durchführung eines solchen Verfahrens eingerichtete elektrische Schaltung.

Unter einer Multilevel-Halbbrücke wird vorliegend eine elektrische Schaltung verstanden, die eine Verbindung zweier Anschlüsse, zwischen denen eine Brückenspannung anliegt, über zwei sich in einem Mittelanschluss treffende Zweige aufweist, wobei am Mittelanschluss gegen das Potential eines der vorgenannten Anschlüsse eine Mittelspannung anliegt und wobei die zum Mittelanschluss symmetrisch ausgebildeten Zweige jeweils eine vorgegebene Anzahl n von in Serie geschalteten Schaltelementen aufweisen. Dabei sind die Verbindungsstellen zwischen je zwei benachbarten Schaltelementen des ersten Zweigs jeweils über einen Kondensator mit den symmetrisch zum Mittelanschluss gelegenen Verbindungsstellen zwischen je zwei Schaltelementen des zweiten Zweigs verbunden. Die Schaltelemente der Multilevel-Halbbrücke sind unter Einsatz einer Steuereinheit in verschiedene Schaltzustände schaltbar.

Eine solche Multilevel-Halbbrücke, die häufig auch als "Flying Capacitor Multilevel Umrichter" bzw. "Flying Capacitor Multilevel Converter/Inverter" bezeichnet wird, ist aus dem Stand der Technik grundsätzlich bekannt, wobei hier die (äußeren) Anschlüsse der Multilevel-Halbbrücke mit einer (externen) Brückenspannung beaufschlagt werden und somit der Mittelanschluss zum Abgriff der Mittelspannung als Ausgangsspannung dient.

Entsprechende Schaltungen und Verfahren zu deren Betrieb sind z.B. aus den Veröffentlichungen
- "Modified Phase-Shifted PWM Control for Flying Capacitor Multilevel Converters"; Feng, C.; Liang, J; Agelidis V.G.; IEEE Transactions on Power Electronics, Vol. 22, No. 1, January 2007, Seiten 178 - 185 und
- "Modelling and Control of a Flying-Capacitor Inverter"; Watkins, S.J.; Zhang, L.; School of Electronic and Electrical Engeneering, University of Leeds, UK, EPE 2001, Graz
- " Multilevel Converters - A new Breed of Power Converters"; Jih-Sheng Lai; Fang Zheng Peng; IEEE Transactions on Industry Applications, Vol. 32, No. 3, May/June 1996, Seiten 511-512
bekannt.

Man spricht insoweit von "fliegenden Kapazitäten", da deren jeweiliges Potential sich-abhängig vom konkreten Schaltzustand der einzelnen Schaltelemente - gegenüber dem an einem Anschluss der Multilevel-Halbbrücke anliegenden Bezugspotentials ständig verschiebt. Von Vorteil ist dabei, dass die durch die einzelnen Schaltelemente zu schaltenden Spannungen auf einen Bruchteil der insgesamt zu schaltenden Spannung reduziert werden kann, wodurch sich die Anforderungen an deren Auslegung reduziert. Ferner ist bekannt, dass bei vorgegebener Brückenspannung zu jeder - in verschiedenen Spannungsniveaus vorgebbaren - Mittelspannung, soweit diese nicht 0 ist oder der Brückenspannung entspricht, abhängig von den gewählten Ladungsniveaus der Kondensatoren eine Mehrzahl an unterschiedlichen Schaltzuständen existieren, die in redundanter Weise jeweils die gleiche Mittelspannung bereitstellen, dies jedoch, abhängig vom konkreten Schaltzustand der Schaltelemente, unter Rückgriff auf verschiedene Kondensatoren der Schaltung. Der Betrieb einer solchen Halbbrücke erweist sich jedoch - selbst bei einer im Wesentlichen gleichförmigen Last am Mittelausgang der Halbbrücke - als außerordentlich komplex, da die verschiedenen Schaltzustände der Schaltelemente einen unterschiedlichen Einfluss auf die Ladezustände der einzelnen Kondensatoren haben und da - im Falle einer zu hohen oder zu niedrigen Aufladung eines der Kondensatoren - ein oder mehrere Schaltelemente oder Kondensatoren zerstört werden können.

Multilevel-Halbbrücken der eingangs genannten Art dienen derzeit, soweit diese überhaupt praktisch zum Einsatz kommen, hauptsächlich der Schaltung von Spannungen im hohen Leistungsbereich. Der komplexe Aufbau und Betrieb einer solchen Multilevel-Halbbrücke hat deren Einsatz in mittleren und niedrigeren Leistungsbereichen jedoch als wenig attraktiv erscheinen lassen.

Nach dem konventionellen Stand der Technik werden Spannungs- bzw. Stromumrichter im kleinen und mittleren Leistungsbereich bis zur Größenordnung von einigen hundert Kilowatt Leistung üblicherweise in Art üblicher Abwärtswandler / Buck-Converter, Aufwärtswandler / Hochsetzsteller / Boost-Converter, Inverswandler / Buck-Boost-Converter, SEPIC-Wandler, Ćuk-Wandler / Ćuk-Converter, Doppelinverter, Zeta-Wandler, Durchflusswandler oder Sperrwandler als Zweipunktwandler ausgeführt.

Bei all den vorgenannten Topologien wird die geschaltete Spannung zwischen zwei Spannungsniveaus umgeschaltet. Deshalb werden diese Topologien auch als Zweipunktwandler-Topologien bezeichnet. Hierbei entstehen Oberwellen, je steiler die Schaltflanken umso mehr, EMV-Störungen, Umladungsverluste an parasitären Kapazitäten, Ummagnetisierungsverluste in Induktivitäten und ohmsche Verluste an den stromführenden Komponenten, die durch die Oberwellen und damit einhergehenden hohen Frequenzen noch weiter verstärkt werden (Skin-Effekt).

Deshalb kommen in der Energietechnik, bei Spannungs- bzw. Stromumrichtern für hohe Leistungen, die typischerweise im Megawattbereich liegen, teilweise sogenannte Multilevel-Umrichter zum Einsatz. Hier werden meist modulare oder kaskadierbare Multilevel-Umrichter oder kaskadierte Mehrpunktwechselrichter mit getrennten Gleichstromzwischenkreisen verwendet, bei welchen mehrere auf der Leistungsseite als Zweipol wirkende Module mit eigenen Gleichstromzwischenkreisen und Ladungsspeichern in Reihe und zu Halbbrücken zusammengeschaltet werden. Diese Umrichter sind für hohe Leistungen gut geeignet und zeichnen sich durch Modularität, gute Skalierbarkeit, reduzierte Oberwellen, gute EMV-Eigenschaften und hohen Wirkungsgrad aus. Dafür sind Aufbau und Steuerung relativ aufwändig und diese Systeme deshalb für kleinere Leistungsklassen momentan nicht geeignet.

Daneben gibt es Flying Capacitor Multilevel Umrichter in Art einer Multilevel-Halbbrücke der bereits eingangs genannten Art und so genannte Diode Clamped Multilevel-Umrichter.

Diese sind, wie dies für den Flying Capacitor Multilevel Umrichter bereits erwähnt wurde, nicht so flexibel und modular aufgebaut, wie die anderen vorgenannten modularen Multilevel-Umrichter, und werden deshalb in der Energietechnik praktisch nicht eingesetzt. Außerdem verlangen diese Umrichter eine relativ aufwendige Ansteuerung und Spannungsüberwachung an den Speicherkondensatoren und werden deshalb insbesondere bei kleineren oder mittleren Leistungen bisher nicht oder kaum praktisch eingesetzt.

Vor dem Hintergrund des vorstehend erläuterten Stands der Technik ist es die Aufgabe der vorliegenden Erfindung ein Verfahren zum Betrieb einer elektrischen Schaltung in Art der eingangs beschriebenen Multilevel-Halbbrücke ("Multilevel Flying Capacitor Umrichter") sowie eine zur Durchführung des Verfahrens entsprechend eingerichtete Multilevel-Halbbrücke bereitzustellen, welche unter Bereitstellung eines vereinfachten Schaltschemas für einen möglichst einfach zu realisierenden und stabilen Betrieb der Multilevel-Halbbrücke eingerichtet ist.

Diese Aufgabe wird mit einem Verfahren gemäß Anspruch 1 und einer elektrischen Schaltung in Art einer Multilevel-Halbbrücke gemäß Anspruch 17 gelöst.

Weitere vorteilhafte Aspekte der vorliegenden Erfindung ergeben sich aus den abhängigen Patentansprüchen, die - neben weitergehenden Verbesserungen des erfindungsgemäßen - insbesondere auch verschiedene Systemgestaltungen betreffen, in denen wenigstens eine erfindungsgemäße Multilevel-Halbbrücke zum Einsatz kommen kann.

Der besseren Übersichtlichkeit halber werden die vorliegende Erfindung und ihre bevorzugten Weiterbildungen nachfolgend anhand der in den Zeichnungen dargestellten Ausführungsbeispiele näher erläutert. Dabei zeigt
- Fig. 1: ein Ausführungsbeispiel einer erfindungsgemäßen Multilevel-Halbbrücke mit insgesamt 2n Schaltelementen und (n-1) Kondensatoren,
- Fig. 2: eine Tabelle enthaltend die im Rahmen eines Ausführungsbeispiels der Erfindung für verschiedene Spannungsniveaus am Mittelausgang bevorzugt zu wählenden Schaltzustände inklusive weitergehender Informationen hierzu,
- Fig. 3: ein weiteres Ausführungsbeispiel der Erfindung mit geeignet angeordneten Strommessgeräten,
- Fig. 4: ein Ausführungsbeispiel einer erfindungsgemäßen Multilevel-Halbbrücke mit Ausgleichswiderständen R₁ bis R₂ₙ,
- Fig. 5: ein Ausführungsbeispiel einer als Abwärtswandler verwendeten Multilevel-Halbbrücke erfindungsgemäßer Art,
- Fig. 6: ein Ausführungsbeispiel einer als Aufwärtswandler verwendeten Multilevel-Halbbrücke erfindungsgemäßer Art,
- Fig. 7: ein Ausführungsbeispiel einer als Inverter verwendeten Multilevel-Halbbrücke erfindungsgemäßer Art,
- Fig. 8: ein Ausführungsbeispiel eines Systems mit zwei als Auf- und Abwärtswandler verwendeten Multilevel-Halbbrücken erfindungsgemäßer Art,
- Fig. 9: ein Ausführungsbeispiel eines Systems mit mehreren Multilevel-Halbbrücken erfindungsgemäßer Art, die parallel verschaltet und phasenverschoben betrieben werden,
- Fig. 10: ein Ausführungsbeispiel eines Systems mit einer Multilevel-Halbbrücke erfindungsgemäßer Art, die mit einer einfachen Halbbrücke zu einer Vollbrücke verschaltet ist,
- Fig. 11: ein Ausführungsbeispiel eines Systems, bei dem mehrere Multilevel-Halbbrücken erfindungsgemäßer Art parallel verschaltet sind und mit einer einfachen Halbbrücke zu einer Vollbrücke verschaltet sind,
- Fig. 12: ein Ausführungsbeispiel eines Systems, bei dem zwei erfindungsgemäße Halbbrücken zu einer Vollbrücke verschaltet sind,
- Fig. 13: ein Ausführungsbeispiel eines Systems aus zwei (Sub-)Systemen aus jeweils einer Mehrzahl an erfindungsgemäße Multilevel-Halbbrücken gemäß Fig. 9, die zu einer Vollbrücke verschaltet sind,
- Fig. 14: ein Ausführungsbeispiel einer aus drei erfindungsgemäßen Multilevel-Halbbrücken zusammengestellten Multilevel-Drehstrombrücke,
- Fig. 15: ein Ausführungsbeispiel einer weiteren Multilevel-Drehstrombrücke, bei der drei Systeme gemäß Fig. 9 geeignet verschaltet sind, und
- Fig. 16: ein Multilevel-DC/AC-Konverter-System aus einer Mehrzahl an erfindungsgemäßem und geeignet verschalteten Multilevel-Halbbrücken.

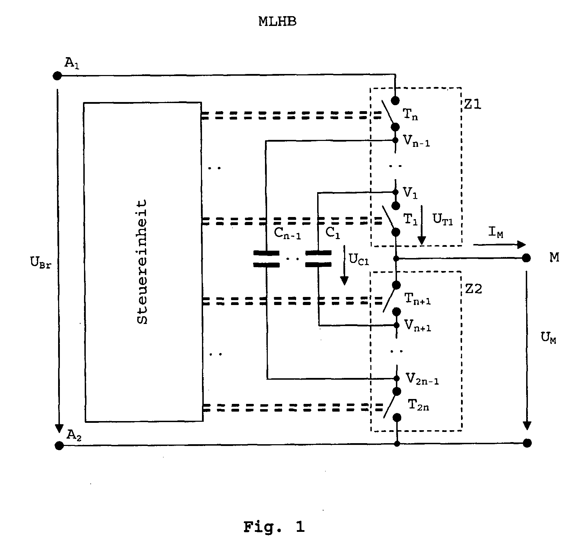

Fig. 1 veranschaulicht ein Ausführungsbeispiel einer erfindungsgemäßen elektrischen Schaltung in Art einer Multilevel-Halbbrücke MLHB. Die Schaltung weist eine Verbindung der mit einer Brückenspannung U_{Br} beaufschlagten Anschlüsse A₁, A₂ über zwei sich in einem Mittelanschluss M treffende Zweige Z1, Z2 auf, wobei am Mittelanschluss M gegen das Potential eines der Anschlüsse A₁, A₂ (im vorliegenden Fall gemäß Fig. 1 gegen den unteren Anschluss A₂) eine Mittelspannung UM anliegt bzw. abgreifbar ist. Im Rahmen der vorliegenden Erfindung können somit entweder die äußeren Anschlüsse A₁, A₂ der Multilevel-Halbbrücke als Eingangsseite zur Einspeisung einer (externen, d.h. vorgegebenen) Brückenspannung D_{Br} dienen oder es kann der Mittelanschluss als Eingangsseite zur Einspeisung einer (externen, d.h. vorgegebenen) Mittelspannung U_{M} gegenüber einem der Anschlüsse A₁ oder A₂ dienen. Die zum Mittelanschluss M symmetrisch ausgebildeten Zweige Z1, Z2 weisen jeweils eine Anzahl n (z.B. 2, 3, 4, 5, 6 oder mehr) von in Serie geschalteten Schaltelementen T₁,..., Tₙ; Tₙ₊₁,..., T₂ₙ auf, wobei die Verbindungsstellen (Vᵢ; i ∈ {1,..., n-1}) zwischen je zwei benachbarten Schaltelementen Tᵢ, Tᵢ₊₁ des ersten Zweigs Z1 jeweils über einen Kondensator Cᵢ mit den symmetrisch zum Mittelanschluss M gelegenen Verbindungsstellen Vₙ₊ᵢ zwischen je zwei Schaltelementen Tₙ₊ᵢ, Tₙ₊ᵢ₊₁ des zweiten Zweigs verbunden sind. Dies ist, wie dies aus Fig. 1 unmittelbar ersichtlich ist, dahingehend zu verstehen, dass jede Verbindungsstelle Vᵢ des ersten Zweigs Z1 über exakt einen Kondensator Cᵢ mit der symmetrisch hierzu gelegenen Verbindungsstelle Vₙ₊ᵢ des zweiten Zweigs Z2 verbunden ist, wobei in jedem Zweig n-1 solcher Verbindungsstellen V₁, ..., Vₙ₋₁; Vₙ₊₁, ... , , V₂ₙ₋₁ existieren.

Die Schaltelemente T₁, ..., T₂ₙ sind unter Einsatz der in Fig. 1 dargestellten Steuereinheit in verschiedene Schaltzustände Zᵢ schaltbar. Dabei entspricht also ein Schaltzustand Zᵢ einem 2n-Tupel enthaltend den jeweiligen Schaltzustand (0 für offen bzw. inaktiv; 1 für geschlossen bzw. aktiv) aller Schaltelemente T₁, ..., T₂ₙ. Die erfindungsgemäße Multilevel-Halbbrücke MLHB bzw. deren Steuereinheit ist zur Durchführung des nachfolgend näher erläuterten erfindungsgemäßen Verfahrens eingerichtet.

Das erfindungsgemäße Verfahren zum Betrieb der vorstehend erläuterten elektrischen Schaltung in Art einer (Flying Capacitor) Multilevel-Halbbrücke ist durch die folgenden Schritte gekennzeichnet:
A) Bei vorgegebener Brückenspannung U_{Br} Vorgeben einer gewünschten Mittelspannung U_{M}, die ausschließlich ausgewählt wird aus n+1 verschiedenen Spannungsniveaus N entsprechend dem p-fachen Wert des n-ten Teils der Brückenspannung (U_{M}=p/n x U_{Br}), wobei p eine ganze Zahl mit 0 <= p <= n ist, oder
   bei vorgegebener Mittelspannung UM mit U_{M} ≠ 0 Vorgeben einer gewünschten Brückenspannung U_{Br}, die ausschließlich ausgewählt wird aus n verschiedenen Spannungsniveaus entsprechend dem n-fachen Wert des p-ten Teils der Mittelspannung (U_{Br} =n/p x UM), wobei p eine ganze Zahl mit 1 <= p <= n ist,
B) Betreiben der Schaltung in einem Regelbetrieb, solange nicht gemäß Schritt A) eine neue Mittelspannung UM oder eine neue Brückenspannung U_{Br} aus den genannten Spannungsniveaus gewählt wird, wobei in dem Regelbetrieb
   - anfänglich sämtliche Kondensatoren Cᵢ auf ein ganzzahliges Vielfaches des n-ten Teils der Brückenspannung U_{Br} geladen werden, so dass die Spannung U_{Ci} an jedem Kondensator Cᵢ den Wert U_{Ci}= i/n x U_{Br} annimmt,
   - jedes Schaltelement T₁, ..., T₂ₙ in geöffnetem Zustand jeweils dem n-ten Teil der Brückenspannung D_{Br} ausgesetzt ist, und
   - die gewünschte Mittelspannung UM oder die gewünschte Brückenspannung U_{Br}, außer in den Fällen U_{M}=0 oder U_{M}=U_{Br}, durch Realisierung einer in Schaltzyklen gruppierten Abfolge von verschiedenen jeweils die gewünschte Mittelspannung UM bereitstellenden Schaltzuständen Zᵢ der Schaltelemente T₁, ..., T₂ₙ gehalten wird, wobei jeder Schaltzyklus eine vorgegebene Anzahl an verschiedenen Schaltzuständen Zᵢ umfasst, die bei konstanter Last an der Multilevel-Halbbrücke MLHB über einen vollständigen Schaltzyklus jeweils gleich lang und gleich oft aktiv sowie derart gewählt sind, dass in jedem Schaltzyklus jeder Kondensator C₁, ..., Cₙ₋₁ gleich lange und gleich oft be- und entladen wird.

Das erfindungsgemäße Verfahren geht dabei insbesondere von zwei möglichen Szenarien aus, indem durch geeignete Einspeisung einer Eingangsspannung entweder die Brückenspannung U_{Br} oder die Mittelspannung U_{M} vorgegeben ist. Hierzu muss ersichtlich nicht zwingend die Eingangsspannung direkt zwischen den äußeren Anschlüssen A₁, A₂ der Halbbrücke oder am Mittelanschluss M gegen den Anschluss A₁ oder A₂ eingespeist werden. Vielmehr kann die Brückenspannung oder die Mittelspannung auch durch Einspeisung an anderer Stelle einer ggfs. erweiterten Schalttopologie indirekt vorgegeben sein.

Abhängig hiervon ist dann gemäß Schritt (A) - aus einer begrenzten Zahl an vorgegebenen Spannungsniveaus - eine gewünschte Mittelspannung (zwischen Mittelanschluss M und einem der äußeren Anschlüsse A₁ oder A₂) oder eine gewünschte Brückenspannung (zwischen den äußeren Anschlüssen A₁, A₂) vorzugeben. Sodann werden gemäß Schritt (B)-vorteilhaft durch Realisierung einer geeignet zu wählenden Schaltfolge an Schaltzuständen Zᵢ der Schaltelemente T₁,..., T₂ₙ - zunächst die Kondensatoren C₁, ..., Cₙ₋₁ auf spezifisch vorgegebene Spannungsniveaus aufgeladen und anschließend die Multilevel-Halbbrücke MLHB - in einem ggfs. geregelten Betriebsmodus - durch geeignete Schaltzyklen auf dem jeweils gewünschten (Ausgangs-) Spannungsniveau gehalten, bis für dieses ein neuer Wert vorgegeben wird. Bei konstanter Last an der Halbbrücke bleiben dabei die Kondensatoren stets gleich geladen, wobei unter der Last an der Multilevel-Halbbrücke MLHB ersichtlich die am Ausgang, also insbesondere eine am Mittelanschluss M oder an den äußeren Anschlüssen A₁, A₂ anliegende Last zu verstehen.

Im Rahmen der vorliegenden Erfindung wird somit in allgemeingültiger Weise für Multilevel-Halbbrücken der vorstehend erläuterten Art mit einer beliebig vorgegebenen Anzahl an Schaltelementen ein besonders einfach hard- und/oder softwaretechnisch realisierbares Betriebsschema bereitgestellt, welches in einem Regelbetrieb bei (im Wesentlichen) konstanter Last stets dafür Sorge trägt, dass die einzelnen Kondensatoren - nach Abschluss eines jeden Schaltzyklus - wieder auf ihre anfängliche Spannung gemäß der getroffenen Vorgabe geladen sind. Hierzu wird ausgenutzt, dass jede gemäß Schritt (A) aus einer begrenzten Anzahl an vorgebbaren Spannungsniveaus "ausgewählte" Mittel- bzw. Brückenspannung durch eine Mehrzahl an unterschiedlichen Schaltzuständen Zᵢ eingestellt werden kann, in denen verschiedene der vorhandenen Kondensatoren entweder be- oder entladen werden, wobei die betreffenden Schaltzustände im erfindungsgemäßen Sinne in einem Regelbetrieb bei konstanter Last so gewählt und jeweils für eine gleich lange Zeitspanne aktiviert werden, dass nach Abschluss jedes Schaltzyklus jeder von einem Be- oder Entladevorgang betroffene Kondensator während des Schaltzyklus' gleich lange be- und entladen wurde.

Gegenstand der Erfindung ist somit insbesondere eine Vereinfachung der Ansteuerung und der Spannungsregelung sowie - in weiter unten diskutierten Weiterbildung der Erfindung - auch die Minimierung der Schaltverluste beim Schalten der Schaltelemente und der Umladungsverluste der Kondensatoren durch Verwendung einer hierfür optimierten Schaltfolge, die Realisierung einer besonders einfachen Spannungsüberwachung an den Speicherkondensatoren, die Implementierung eines Verfahrens zur weiteren Reduzierung der Schaltverluste beim Schalten der Schaltelemente durch spannungs- bzw. stromloses Ein- bzw. Ausschalten und die neuartige schaltungstechnische Anwendung von Flying Capacitor Multilevel-Halbbrücken für Spannungs- bzw. Stromumrichter, womit diese - insbesondere aufgrund der einfach zu realisierenden Schaltfolgen - auch in einem kleinen und mittleren Leistungsbereich zum Einsatz kommen können.

Insgesamt ergibt sich gegenüber den im niedrigen und mittleren Leistungsbereich bisher eingesetzten Umrichtern üblicher Art ein deutlich verbessertes Verhalten im Hinblick auf
- eine reduzierte Schaltspannung an den einzelnen Schaltelementen T₁, ... Tₙ (Max(U_{Ti})=1/n x U_{Br} im Regelbetrieb), wodurch ein Einsatz kleinerer Schaltelemente (und Induktivitäten - siehe unten) ermöglicht wird,
- einen reduzierten Oberwellenanteil der geschalteten Ströme / Spannungen,
- einen reduzierten Skin-Effekt,
- einen niedrigeren Blindstromanteil,
- eine kleinere Stromwelligkeit,
- ein besseres EMV-Verhalten,
- eine Reduzierung ohmscher Verluste,
- einen besseren Wirkungsgrad und
- eine gute Skalierbarkeit, u.a. durch hohen Gleichteileanteil.

Durch die im Rahmen des erfindungsgemäßen Verfahrens erzielten Vereinfachungen und Optimierungen lassen sich Multilevel-Halbbrücken erfindungsgemäßer Art (sowie diese enthaltende Schaltungstopologien der weiter unten noch detailliert beschriebenen Art) vorteilhaft für eine Vielzahl von Leistungselektronikanwendungen einsetzen. Dies betrifft Motorsteuerungen, z.B. für Drehstrommotoren, Stepper-Motoren oder DC-Motoren, Um- und Wechselrichter, z.B. zum Einsatz in Photovoltaik-, Wind- und/oder Wasserkraftanwendungen sowie deren Verwendung in Leistungsnetzteilen, in DC/DC-Umsetzern und in Ladeapplikationen (z.B. in Ladegeräten).

Die erfindungsgemäße Vereinfachung wird insbesondere durch die gegebene Wahl bzw. Vorgabe der Spannungsniveaus (am Mittelausgang bzw. an den äußeren Anschlüssen der Halbbrücke und an den einzelnen Kondensatoren), die Wahl der Schaltfolge sowie weitergehende Optimierungen der nachstehend beschriebenen Art erreicht. Ferner kann durch die erfindungsgemäß erfolgende Optimierung der Schaltfolge eine Minimierung der Kondensatorumladungen und Umladungsverluste sowie eine Minimierung der erforderlichen Schaltfrequenz und von Schaltverlusten erreicht werden. Hiermit verbunden ist auch eine längere Lebensdauer der verwendeten Komponenten sowie eine vereinfachte Kühlung wegen der im Vergleich zum Stand der Technik reduzierten Verlustleistung, wobei die Verteilung der Verlustleistung auf eine Mehrzahl an Einzelkomponenten auch die Entstehung von Hot-Spots verhindert und die Kühlung nochmals vereinfacht.

Bei den Schaltelementen einer erfindungsgemäßen Multilevel-Halbbrücke handelt es sich vorteilhaft um Transistoren (mit ggfs. einer hierzu in geeigneter Richtung parallel geschalteten bzw. in das Schaltelement integrierten Diode, auch Reverse-Diode genannt) oder ausschaltbare Thyristoren. Im Rahmen der Erfindung können insbesondere auch MOSFET's mit bevorzugt geringem RDS-on (Widerstand zwischen "Drain" und "Source" bei geschlossenem/aktivem Zustand), JFETs, insbesondere auf SiC-Basis, IGBTs, IGCTs und GTOs als Schaltelemente verwendet werden.

Die Steuereinheit kann mittels Mikrocontroller, DSP ("digitaler Signalprozessor") FPGA ("field programmable gate array"), CPLD ("complex programmable logic device") oder ASIC ("application-specific integrated circuit") realisiert werden, wobei die Verwendung von FPGAs, CPLDs oder ASICs zum Zwecke der Ansteuerung der Schaltelemente besonders vorteilhaft ist, da hiermit eine besonders schnelle Signalverarbeitung und zeitlich besonders schnelle und exakte Ansteuerung der Schaltelemente realisiert werden kann. Zusätzlich werden zur Ansteuerung der Schaltelemente in der Regel noch Leistungstreiber verwendet.

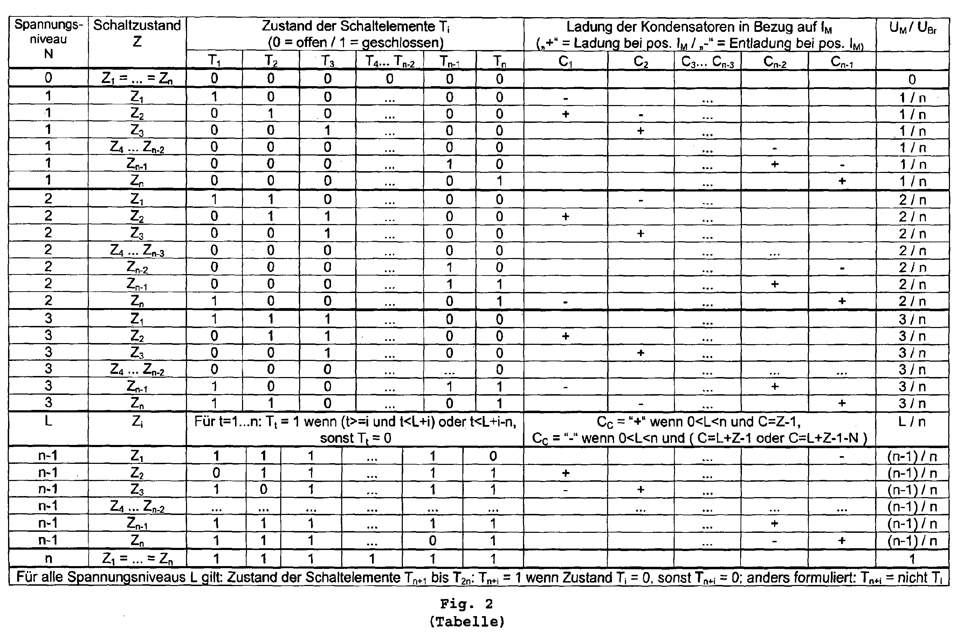

Ein Beispiel für die im Rahmen der Erfindung in jedem Schaltzyklus zu wählenden und dort in einer Schaltfolge nacheinander einzustellenden Schaltzustände ist in der Tabelle aus Fig. 2 gegeben.

Hierbei sind für jedes Spannungsniveau N (siehe die erste Spalte der Tabelle), welchem stets eine bestimmte Mittelspannung U_{M} bzw. Brückenspannung U_{Br} gemäß der letzten Spalte der Tabelle zugeordnet ist, insgesamt n Schaltzustände Z₁ bis Zₙ angegeben, mit welchen - mit Ausnahme des nullten und n-ten Spannungsniveaus entsprechend U_{M}=0 und UM=U_{Br}- durch verschiedene Schaltzustände Zᵢ der Transistoren in redundanter Weise jeweils eine identische Mittelspannung am Mittelanschluss (bei vorgegebener Brückenspannung) bzw. eine identische Brückenspannung (bei vorgegebener Mittelspannung) erzeugbar ist.

Wenngleich grundsätzlich, wie dies weiter oben erläutert wurde, jeder Schaltzustand Zᵢ als 2n-Tupel durch Angabe des Zustands aller 2n Schaltelemente zu charakterisieren ist, so kann bei den vorliegend gemäß Tabelle 2 für jedes Spannungsniveau ausgewählten Schaltzuständen Zᵢ eine eindeutige Charakterisierung der Schaltzustände Zᵢ bereits durch Angabe der Zustände der n Schaltelemente T₁, ..., Tₙ des ersten Zweigs Z1 erfolgen, da sich in vorliegendem Schema - gemäß der letzten Zeile der Tabelle - die Zustände der weiteren Schaltelemente Tₙ₊₁, ..., T₂ₙ hieraus eindeutig ergeben, indem der Zustand jedes Schaltelements Tₙ₊ᵢ des zweiten Zweigs Z2 genau entgegengesetzt zum Zustand des (symmetrisch hierzu angeordneten) Schaltelements Tᵢ gewählt ist.

Die Tabelle in Fig. 2 zeigt ferner zu jedem Schaltzustand Zᵢ eines jeden Spannungsniveaus N, welche der Kondensatoren Cᵢ in dem jeweiligen Schaltzustand Zᵢ be- oder entladen werden. Kondensatoren ohne Eintrag in den betreffenden Zellen der Tabelle werden bei dem zugeordneten Schaltzustand Zᵢ weder be- noch entladen.

Im Rahmen der vorliegenden Erfindung kann somit im Regelbetrieb, d.h. dem erfindungsgemäß geregelten Betrieb der Multilevel-Halbbrücke bei konstanter Last, zum Halten einer gemäß Schritt (A) gewählten Mittelspannung am Mittelanschluss jeder Schaltzyklus aus einer Schaltfolge an verschiedenen Schaltzustände bestehen, in der sämtliche - dem betreffenden Spannungsniveau zugeordneten - Schaltzustände Z₁ bis Zₙ (in grundsätzlich beliebiger Reihenfolge) jeweils einmal für einen jeweils identischen Zeitraum aktiviert werden. Sodann schließen sich kontinuierlich weitere Schaltzyklen der vorstehend beschriebenen Art an, solange das betreffende Spannungsniveau gehalten werden soll. Solange dabei die Last an der Halbbrücke (im Wesentlichen) konstant bleibt, kommt es, wie der Tabelle anschaulich entnommen werden kann, im zeitlichen Mittel zu keinen Umladungen der Kondensatoren, so dass ein stabiler Betriebszustand der Multilevel-Halbbrücke gewährleistet ist.

In einer ersten bevorzugten Weiterbildung des erfindungsgemäßen Verfahrens ist vorgesehen, dass in Schritt B) zu jedem vorgegebenen Spannungsniveau N für die gewünschte Mittelspannung UM oder die gewünschte Brückenspannung U_{Br}, außer für UM = 0 und UM = U_{Br}, jeder Schaltzyklus exakt n Schaltzustände umfasst, die so gewählt sind, dass bei konstanter Last in jedem Schaltzyklus jeder Kondensator C₁, ..., Cₙ₋₁ genau einmal be- und einmal entladen wird und dass in jedem Schaltzustand eines Schaltzyklus jeweils maximal zwei Kondensatoren gleichzeitig be- und/oder entladen werden. Diese spezifische Auswahl der während eines jeden Schaltzyklus einzuhaltenden Schaltzustände Zᵢ, welche z.B. durch die in der Tabelle aus Fig. 2 angegebenen Schaltzustände eingehalten ist, garantiert eine sehr geringe Anzahl an Kondensatorumladungen, wodurch insbesondere die während eines Schaltzyklus erfolgenden Umladungen der einzelnen Kondensatoren und die hierdurch erzeugte minimale Spannungsschwankung ("Spannungs-Ripple") im Ausgangssignal einer erfindungsgemäßen Multilevel-Halbbrücke reduziert wird. Auch die ohmschen Verluste an den Kondensatoren werden so auf ein Mindestmaß reduziert.

Eine weitere bevorzugte Weiterbildung der Erfindung sieht vor, dass die Reihenfolge der Schaltzustände Zᵢ innerhalb eines Schaltzyklus derart gewählt ist, dass beim Wechsel zwischen zwei aufeinanderfolgenden Schaltzuständen Zᵢ eines Spannungsniveaus jeweils immer nur maximal zwei Schaltelemente T₁, ... Tₙ; Tₙ₊₁,..., T₂ₙ je Zweig Z1, Z2 ein- und/oder ausgeschaltet werden, also insbesondere je Zweig Z1, Z2 genau ein Schaltelement eingeschaltet und genau ein Schaltelement ausgeschaltet wird. Dies ist beispielsweise durch die in der Tabelle aus Fig. 2 für jedes Spannungsniveau vorgegebenen Schaltzustände Zᵢ realisierbar, wenn diese (zyklisch) in der Reihenfolge ihrer Nummerierung oder in demgegenüber umgekehrter Reihenfolge aktiviert werden. Dabei wird erkennbar die Anzahl der zum Betrieb der Multilevel-Halbbrücke erforderlichen Schaltvorgänge an den einzelnen Schaltelementen reduziert bzw. minimiert, was auch die Schaltverluste minimiert.

Weiterhin ist im Rahmen der vorliegenden Erfindung zur Optimierung der Schaltfolge vorgesehen, dass bei einem Wechsel zwischen zwei benachbarten Spannungsniveaus der Mittelspannung UM oder der Brückenspannung U_{Br} der erste für das neue Spannungsniveau einzustellende Schaltzustand Zᵢ in Abhängigkeit von dem zuvor für das andere Spannungsniveau eingestellten Schaltzustand Zⱼ so gewählt wird, dass beim Wechsel
zwischen den genannten Schaltzuständen jeweils nur ein Schaltelement T₁, ..., T₂ₙ pro Zweig Z1, Z2 umgeschaltet wird, wobei nochmals bevorzugt beim wiederholten Wechsel zwischen zwei benachbarten Spannungsniveaus jeweils ein anderes Schaltelement T₁,.... T₂ₙ als beim vorherigen Wechsel pro Zweig Z1, Z2 umgeschaltet wird.

Nochmals vorteilhaft werden hierzu in Schritt B) in jedem für ein bestimmtes Spannungsniveau vorgesehenen Schaltzyklus der Reihe nach die von der gewählten Mittelspannung UM bzw. der gewählten Brückenspannung U_{Br} abhängigen Schaltzustände Z₁, ..., Zₙ gemäß der Tabelle in Figur 2 verwendet, womit auch die Vorgabe gemäß der vorstehend genannten Ausführungsvariante erfüllt ist. Soweit hierbei davon gesprochen wird, dass die Schaltzustände "der Reihe nach" verwendet werden, kann dies ersichtlich, wie bereits weiter oben erwähnt, in der Reihenfolge ihrer Nummerierung oder in umgekehrter Reihenfolge erfolgen.

Der Wechsel zwischen je zwei benachbarten Spannungsniveaus kann dabei in bevorzugter Weise so erfolgen, dass jeweils nur ein Schaltelement T₁, ... T₂ₙ pro Zweig Z1, Z2 umgeschaltet wird, wenn entweder beim Wechsel auf das nächst höhere Spannungsniveau der Schaltzustand Zᵢ beibehalten wird und beim Wechsel auf das nächst niedrigere Spannungsniveau der Schaltzustand um eins auf den Schaltzustand Zᵢ₊₁ erhöht wird, (wobei im Sinne einer zyklischen Abfolge Zₙ₊₁ zu Z₁ definiert wird) oder wenn beim Wechsel auf das nächst höhere Spannungsniveau der Schaltzustand Zᵢ um eins auf den Schaltzustand Zᵢ₋₁ erniedrigt wird (wobei Z₀ zu Zₙ definiert wird) und beim Wechsel auf das nächst kleinere Spannungsniveau der Schaltzustand Zᵢ beibehalten wird.

Soweit vorstehend von der Beibehaltung eines Schaltzustands Zᵢ beim Wechsel zwischen Spannungsniveaus gesprochen ist, so bedeutet dies im gegebenen Kontext, dass zum Wechsel des Spannungsniveaus der Schaltzustand mit identischer Bezeichnung Zᵢ des (nächst höheren oder nächst niedrigeren) Spannungsniveaus N eingestellt wird, der sich hinsichtlich des Zustands eines Schaltelements pro Zweigs selbstverständlich von dem identisch bezeichneten Schaltzustand des zuvor aktivierten Spannungsniveaus unterscheidet (vgl. insoweit die identisch bezeichneten Schaltzustände der verschiedenen Spannungsniveaus in der Tabelle aus Fig. 2). Identische Aspekte gelten bei der geforderten Erhöhung / Erniedrigung der genannten Schaltzustände.

Weiterhin ist im Rahmen der vorliegenden Erfindung bevorzugt vorgesehen, dass in Schritt B) während der verschiedenen Schaltzustände Zᵢ eines Spannungszyklus jeweils die exakte Brückenspannung U_{Br} und die exakte Mittelspannung UM gemessen werden und daraus nach dem Durchlaufen von n-1 unterschiedlichen Schaltzuständen Zᵢ über ein lineares Gleichungssystem alle Kondensatorspannungen U_{Ci} errechnet werden, was insbesondere softwaretechnisch in einer geeigneten Steuereinheit realisierbar ist. Hierdurch kann eine sehr effektive Ermittlung und kontinuierliche Überwachung aller Kondensatorspannungen erfolgen, ohne dass diese separat gemessen werden müssen.

Hiermit kann insbesondere ermittelt werden, ob bzw. wann es - z.B. im Falle einer während eines Schaltzyklus nennenswert schwankenden Last - zu unerwünschten Umladungen der Kondensatoren kommt.

Eine auf dem vorstehenden Prinzip aufbauende Berechnungsvariante kann sich im Sinne eines nochmals reduzierten Berechnungsaufwands zu Nutze machen, dass in jedem Spannungsniveau L bei den Schaltzuständen Z₁ und Z_{n+1-L} gemäß der Tabelle aus Fig. 2 stets genau die Spannung eines einzelnen Kondensators am Mittelausgang anliegt und somit direkt gemessen werden kann und dass bei allen weiteren Schaltzuständen Z₂ bis Zₙ (ohne den Schaltzustand Z_{n+1-L}) aus der - während des betreffenden Schaltzustands - gemessenen Brückenspannung und der Mittelspannung und den zuvor gemessenen bzw. berechneten Kondensatorspannungen D_{Ci} der Reihe nach durch einfache Additionen und Subtraktionen jeweils eine weitere Kondensatorspannung ermittelt werden kann, bis alle Kondensatorspannungen bekannt sind. Dies stellt erkennbar eine vereinfachte Art der Lösung des vorstehend erwähnten linearen Gleichungssystems dar.

Eine weitere bevorzugte Variante zur Ladungsüberwachung der einzelnen Kondensatoren sieht vor, dass der durch die Halbbrücke fließende Strom mittels einer Strommessvorrichtung M₃ am Mittelanschluss oder je einer an den zu den Anschlüssen A₁, A₂ führenden Enden der beiden Halbbrückenzweige Z1, Z2 angeordneten Strommessvorrichtung M₁, M₂ gemessen wird und dass daraus die Kondensatorumladungen während eines Schaltzyklus durch diskrete Integration (ΔU = I / C x Δt) berechnet werden, was eine nochmals erhöhte Genauigkeit, insbesondere falls korrigierend in die Schaltfolge bzw. die Länge der Schaltzustände eingegriffen werden soll, bedeutet.

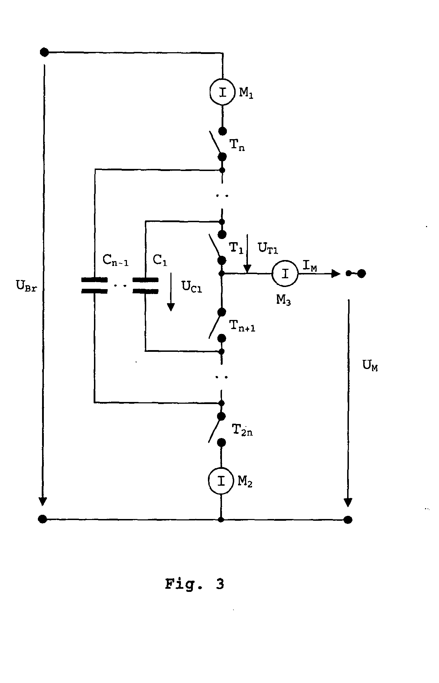

Fig. 3 veranschaulicht für eine erfindungsgemäße Multilevel-Halbbrücke die vorgenannte Anordnung der zur Strommessung erforderlichen Strommessvorrichtungen M₁, M₂, M₃ (geeigneter Bauart), wobei alternativ auf die Strommessvorrichtung M₃ oder die beiden Strommessvorrichtungen M₁ und M₂ zurückgegriffen werden kann.

Die gemäß vorstehenden Varianten berechneten Werte für die Kondensatorspannungen U_{Ci} und/oder die berechneten Werte für die Kondensatorumladungen werden im Rahmen der Erfindung, insbesondere im Falle einer Abweichung von den Sollwerten (U_{Ci}= i/n x U_{Br}), vorteilhaft zu einer adaptiven Änderung der Reihenfolge und/oder der Länge der Schaltzustände Zᵢ herangezogen, womit ein insgesamt sehr einfach zu realisierender Mechanismus zur wirksamen Unterdrückung oder Korrektur unerwünschter Kondensatorumladungen bereitgestellt wird.

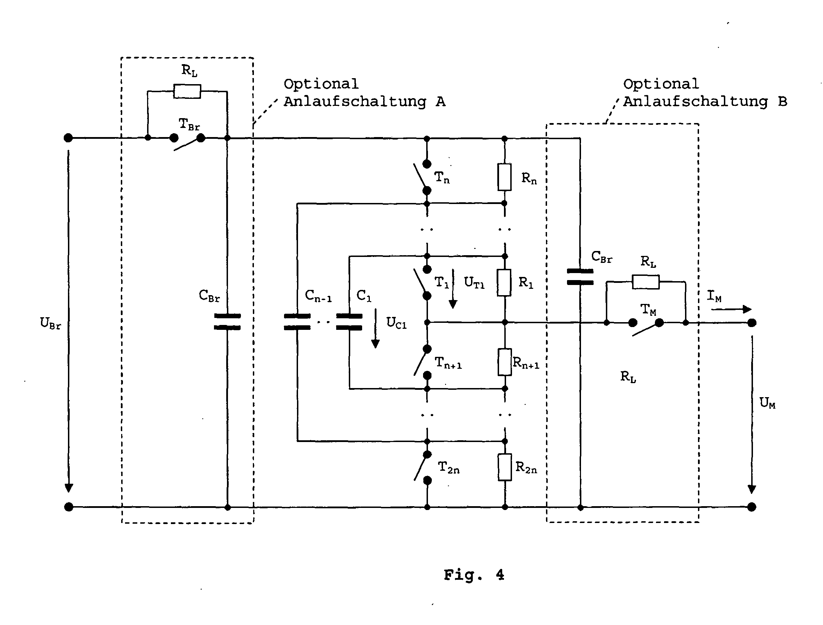

Durch parallel zu den Schaltelementen T₁, ..., T₂ₙ angeordnete Ausgleichswiderstände (R₁, ..., R₂ₙ), Varistoren oder aktive Schaltungsteile, wie dies beispielsweise in Fig. 4 veranschaulicht ist, kann in vorteilhafter Weise eine im Wesentlichen gleichmäßige Ladung der Kondensatoren C₁, ..., Cₙ₋₁ und Verteilung der an den einzelnen Schaltelementen T₁, ..., T₂ₙ anliegenden Sperrspannung bei geöffnetem Schaltelement T₁, ..., T₂ₙ erreicht werden.

Des Weiteren kann abhängig davon, ob die Brückenspannung U_{Br} und/oder die Mittelspannung UM eingespeist wird, zusätzlich eine Anlaufschaltung A und/oder B verwendet werden, über welche die Multilevel-Halbbrücke langsam bzw. schrittweise auf die Betriebsspannung gebracht wird, um eine Überschreitung der zulässigen Sperrspannung an den Schaltelementen, insbesondere den äußeren Schaltelementen Tₙ und T₂ₙ, zu vermeiden. Die Anlaufschaltung A wird bevorzugt realisiert, indem zwischen dem äußeren Anschluss A₁ der Halbbrücke und der eingespeisten Brückenspannung D_{Br} ein weiteres Schaltelement T_{Br} mit parallel angeschlossenem Ladewiderstand R_{L} sowie parallel zu der aus den Schaltelementen T₁ bis T₂ₙ gebildeten Halbbrücke ein Brückenkondensator C_{Br} angeordnet wird, wobei während der Anlaufphase zum Laden der Kondensatoren das Schaltelement T_{Br} geöffnet ist und der Ladestrom über den Ladewiderstand R_{L} fließt und im Betrieb der Halbbrücke das Schaltelement T_{Br} geschlossen ist. Die Anlaufschaltung B wird bevorzugt realisiert, indem zwischen dem Mittelanschluss M der Halbbrücke und der eingespeisten Mittelspannung UM ein weiteres Schaltelement T_{Br} mit parallel angeschlossenem Ladewiderstand R_{L} sowie parallel zu der aus den Schaltelementen T₁ bis T₂ₙ gebildeten Halbbrücke ein Brückenkondensator C_{Br} angeordnet wird, wobei während der Anlaufphase zum Laden der Kondensatoren das Schaltelement T_{M} geöffnet ist und der Ladestrom über den Ladewiderstand R_{L} und teilweise über Reversdioden in den Schaltelementen T₁ bis Tₙ fließt (welche in der Regel bereits in den Schaltelementen integriert sind und bei Bedarf durch zusätzliche externe Dioden parallel zu den Schaltelementen ausgeführt werden) und zum Betrieb der Halbbrücke das Schaltelement T_{Br} geschlossen ist. Auf den Ladewiderstand R_{L} kann bei beiden Anlaufschaltungen A, B auch verzichtet werden, indem das jeweilige Schaltelement T_{Br} während der Anlaufphase langsam bzw. schrittweise geschlossen wird (und hierfür geeignet ausgelegt ist). Alternativ kann bei beiden Anlaufschaltungen A, B der jeweilige Ladewiderstand R_{L} auch als Varistor oder als aktives Bauelement (z.B. Transistor) ausgeführt werden. Eine solche Anlaufschaltung ist insbesondere für die Schalttopologie mit Ausgleichswiderständen gemäß Fig. 4 von Vorteil, kann jedoch vorteilhaft auch bei den sonstigen möglichen Ausgestaltungen einer erfindungsgemäßen Multilevel-Halbbrücke bzw. hierauf aufbauenden Schalttopologien vorgesehen sein.

Ferner lassen sich in bevorzugter Weise - durch geeignete Ausgestaltung des Umschaltvorgangs zwischen je zwei Schaltzuständen - die kapazitiven Einschaltverluste und/oder die ohmschen Ausschaltverluste an den Schaltelementen reduzieren bzw. minimieren, wenn im Rahmen einer nochmaligen Weiterbildung der vorliegenden Erfindung ein Zero-Voltage-Switching (spannungsfreies Einschalten) und/oder ein Zero-Current-Switching (stromloses Ausschalten) der einzelnen Schaltelemente T₁,.... T₂ₙ realisiert wird, indem insbesondere unter Nutzung parasitärer und/oder gezielt eingebrachter Kapazitäten in Verbindung mit einer am Mittelanschluss (M) angeschlossenen Induktivität und/oder parasitären Streuinduktivität
- der Schaltzeitpunkt zum Schließen der Schaltelemente T₁, ..., T₂ₙ so gewählt wird, dass zu diesem Zeitpunkt die Spannung an dem zu schließenden Schaltelement Null oder nahe Null ist, womit kapazitive Einschaltverluste vermindert werden, und/oder
- der Schaltzeitpunkt zum Öffnen der Schaltelemente T₁, ..., T₂ₙ bei resonantem oder lückendem Betrieb oder an der Grenze zum lückenden Betrieb so gewählt wird, dass zu diesem Zeitpunkt der Strom an dem zu öffnenden Schaltelement nahe Null ist, womit ohmsche Ausschaltverluste verhindert werden.

Dabei kann ein Zero-Voltage-Switching insbesondere dadurch realisiert werden, dass beim Öffnen eines zuvor geschlossenen Schaltelements T₁,.... T₂ₙ der Verlauf der Mittelspannung UM zeitlich hinreichend hochauflösend gemessen, mit der rechnerisch zu erwartenden Spannung des zu aktivierenden Spannungsniveaus verglichen und daraus eine Schaltverzögerung sowie der Schaltzeitpunkt für ein im Rahmen der Schaltfolge zu schließendes Schaltelement T₁, ..., T₂ₙ derart ermittelt wird, dass zu diesem Schaltzeitpunkt die Spannung an dem zu schließenden Schaltelement T₁, ..., T₂ₙ Null oder nahe Null ist. Das Zero-Current-Switching kann insbesondere dadurch realisiert werden, dass der durch die Halbbrücke fließende Strom mittels einer Strommessvorrichtung M3 am Mittelanschluss oder eines an den zu den Anschlüssen A₁, A₂ führenden Enden der beiden Halbbrückenzweige Z1, Z2 angeordneten Strommessvorrichtungen M1, M2 so hochauflösend gemessen wird, dass daraus der Stromverlauf durch die stromführenden Schaltelemente (T₁, ..., T₂ₙ) bekannt ist, wobei aus diesem Stromverlauf eine Schaltverzögerung und der Schaltzeitpunkt für das zu öffnende Schaltelement T₁, ..., T₂ₙ bei resonantem oder lückendem Betrieb oder an der Grenze zum lückenden Betrieb so ermittelt wird, dass zu diesem Schaltzeitpunkt der Strom an dem bzw. den zu öffnenden Schaltelement(en) T₁, ..., T₂ₙ Null oder nahe Null ist.

Ferner kann vorteilhaft vorgesehen sein, dass aus den in einem bestimmten zeitlichen Raster gemessenen Spannungs- und/oder Stromwerten rechnerisch durch Interpolation, Mittelwertbildung und/oder (Fast-)Fourier-Transformation ein der Realität nahe kommender Spannungs- und/oder Stromverlauf ermittelt und dieser zur Ermittlung der Schaltverzögerung und des (zum Zero-Current- und/oder Zero-Voltage-Switching) entsprechend korrigierten Schaltzeitpunkts des zu schaltenden Schaltelements T₁, ..., T₂ₙ verwendet wird. Weiterhin kann bevorzugt vorgesehen sein, dass der Spannungs-und/oder Stromverlauf an den zu schaltenden Schaltelementen T₁, ..., T₂ₙ unter Berücksichtigung bekannter, ggf. parasitärer, Induktivitäts- und/oder Kapazitätswerte und den bekannten Spannungsniveaus berechnet und dass dieser zur Ermittlung der Schaltverzögerung und des entsprechend korrigierten Schaltzeitpunkts des zu schaltenden Schaltelements T₁, ..., T₂ₙ verwendet wird, wobei optional eine rechnerische Berücksichtigung des Einflusses von Temperatur und/oder Spannung auf die wirkenden Induktivitäts- und Kapazitätswerte erfolgt. Die zum Zero-Voltage-Switching und/oder Zero-Current-Switching erforderliche Schaltverzögerung für die zu schaltenden Schaltelemente T₁, ..., T₂ₙ kann zweckmäßiger Weise in der Schaltung fest vorgegeben werden, und zwar entweder schaltungstechnisch in der Schaltung oder durch Hinterlegung in einem in die Schaltung integrierten oder mit der Schaltung verbundenen Speicherelement, wobei die Schaltverzögerung optional unter Berücksichtigung des Einflusses der Brückenspannung, einzelner oder mehrerer Kondensatorspannungen, des Stroms an den Anschlüssen der Halbbrücke und/oder der Temperatur der relevanten Bauelemente mittels einer Wertetabelle, in der die von diesen Einflussparametern abhängigen Werte zur Steuerung der Schaltverzögerungen für das Öffnen und/oder Schließen der Schaltelemente T₁, ..., T₂ₙ hinterlegt sind, vorgegeben ist. Sämtliche das erfindungsgemäße Verfahren betreffenden Aspekte und bevorzugten Weiterbildungen gelten ersichtlich in gleicher Weise für die erfindungsgemäße elektrische Schaltung in Art einer Multilevel-Halbbrücke, die zur Durchführung eines der vorstehend erläuterten Verfahrens eingerichtet ist.

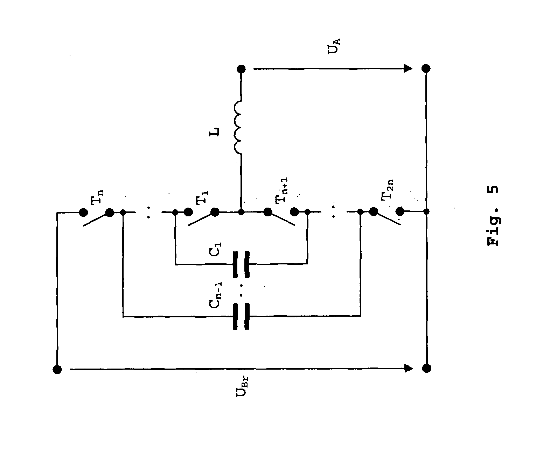

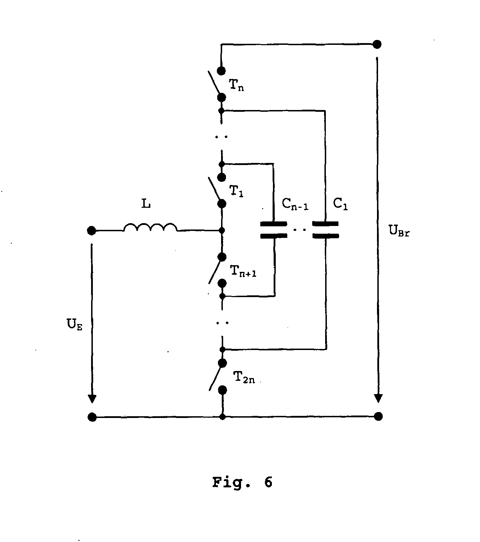

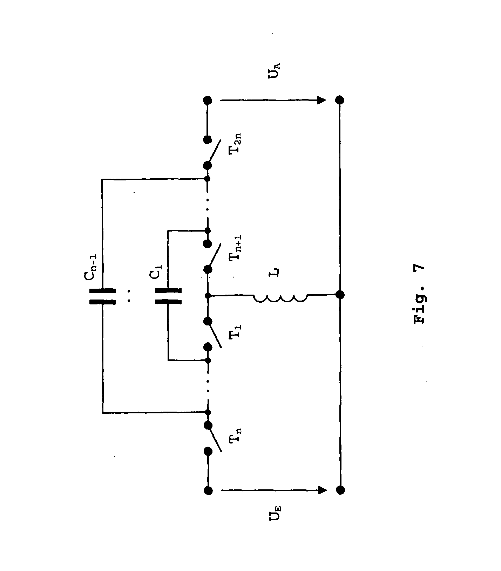

Eine solche Multilevel-Halbbrücke kann unter Verwendung einer an ihrem Mittelanschluss M angeschlossenen Induktivität L in besonders vorteilhafter Weise zur Verwendung als Abwärtswandler (siehe Fig. 5), als Aufwärtswandler (siehe Fig. 6) oder als Inverter (siehe Fig. 7) dienen. Dabei ergibt sich der Vorteil, dass die verwendete Induktivität - im Vergleich zu herkömmlichen Ab-/Aufwärtswandlern bzw. Invertern - mit deutlich geringeren Spannungshüben angesteuert wird, somit kleiner dimensioniert werden kann und geringere Verluste verursacht. Ferner ist die Überbrückung relativ großer Spannungsunterschiede mit relativ kleinen Induktivitäten und geringen Verlusten möglich. Auch die als Inverter verwendete Multilevel-Halbbrücke gemäß Fig. 7 lässt sich im erfindungsgemäßen Sinne betreiben, da sich hier die Brückenspannung U_{Br} als die Differenz zwischen Eingangsspannung U_{E} und (gewünschter) Ausgangsspannung U_{A} ergibt.

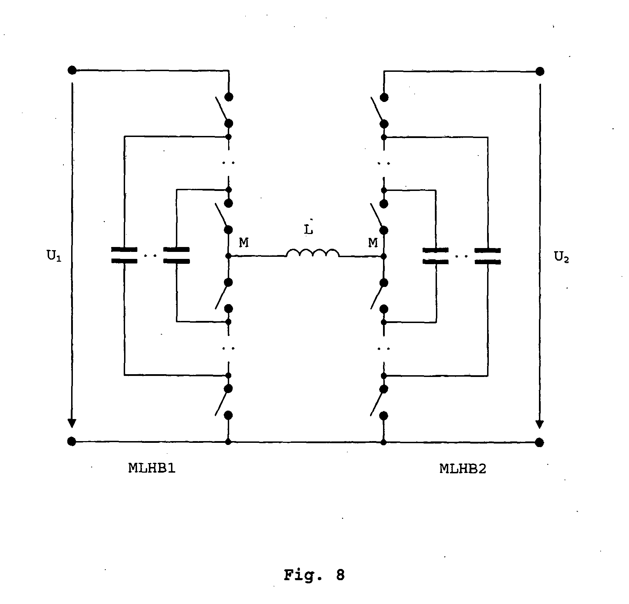

Fig. 8 veranschaulicht eine weitere bevorzugte Ausgestaltung der vorliegenden Erfindung, in welcher ein System aus zwei Multilevel-Halbbrücken MLHB1, MLHB2 bereitgestellt wird, bei dem die zwei Multilevel-Halbbrücken MLHB1, MLHB2 über ihre jeweiligen Mittelanschlüsse M mit einer gemeinsamen Induktivität L verbunden sind, wobei beide Multilevel-Halbbrücken MLHB1, MLHB2 als Auf- oder Abwärtswandler betreibbar sind, so dass das System als bidirektionaler Auf- und Abwärtswandler zur Konvertierung variabler Eingangsspannungen (U₁; U₂) in variable Ausgangsspannungen (U₂; U₁) einsetzbar ist.

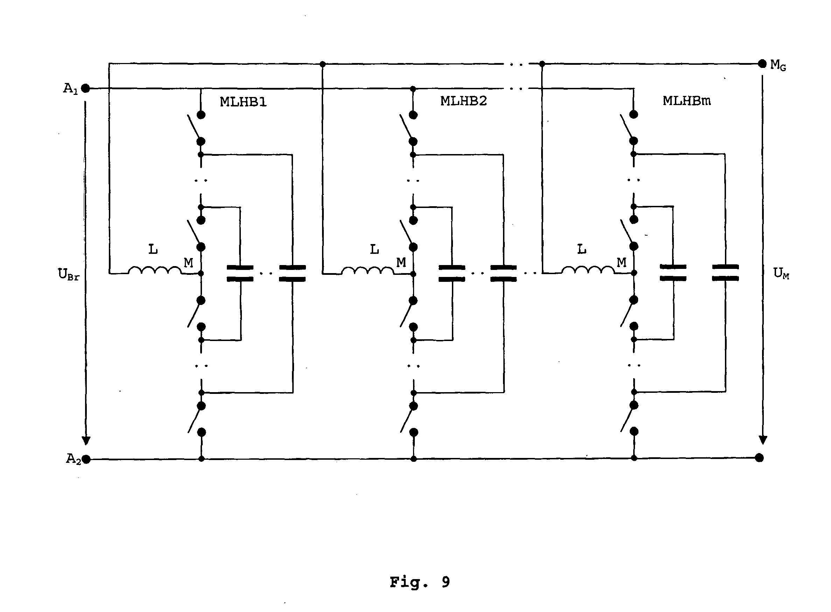

Weiterhin kann im Rahmen der vorliegenden Erfindung ein in Fig. 9 dargestelltes System aus einer Mehrzahl an Multilevel-Halbbrücken MLHB1, MLHB2, ..., MLHBm realisiert werden, bei dem die Multilevel-Halbbrücken MLHB1, MLHB2, ..., MLHBm derart parallel verschaltet sind, dass deren jeweilige Anschlüsse A₁, A₂ mit einer gemeinsamen Brückenspannung U_{Br} beaufschlagt sind und dass deren jeweilige Mittelanschlüsse M über je eine Induktivität L mit einem gemeinsamen Mittelanschluss M_{G} verbunden sind, wobei die einzelnen Multilevel-Halbbrücken MLHB1, MLHB2, ..., MLHBm vorteilhaft für einen phasenverschobenen Betrieb eingerichtet sein können, bei dem die Phasenverschiebung zwischen je zwei aufeinanderfolgenden Multilevel-Halbbrücken MLHB1, MLHB2, ..., MLHBm bevorzugt jeweils 360°/m ist, wobei m die Anzahl an Multilevel-Halbbrücken MLHB1, MLHB2, ..., MLHBm ist (m >= 2). Im Falle von insgesamt zwei Multilevel-Halbbrücken sollte somit eine Phasenverschiebung von 180°, bei drei Halbbrücken eine Phasenverschiebung von je 120°, etc. realisiert werden. Bei einem solchen System kann im Rahmen der Schaltung von Lasten sowohl eingangsals auch ausgangsseitig ein im Vergleich zum Stand der Technik deutlich gleichmäßigerer Stromfluss und ein gleichmäßigerer Energietransport erzielt werden. Zur Verbesserung des Wirkungsgrades bei niedriger Leistungsabnahme kann im Falle einer niedrigen Leistungsabnahme kann bei einem solchen System optional vorgesehen sein, dass einzelne Multilevel-Halbbrücken zur Reduzierung der Verlustleistung deaktiviert bzw. nicht betrieben werden und somit nahezu stromlos sind.

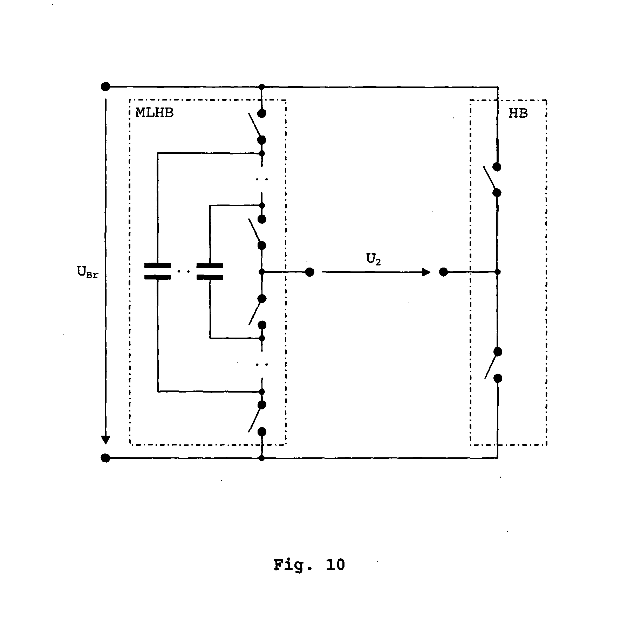

Zur bipolaren Ansteuerung von Stromquellen und/oder Stromsenken, insbesondere verschiedener Verbraucher, wie z.B. Transformatoren oder Motoren, mit unterschiedlichen Spannungsniveaus bietet sich in abermals bevorzugter Weiterbildung der Erfindung das in Fig. 10 dargestellte System an, in dem eine erfindungsgemäße Multilevel-Halbbrücke MLHB und eine einfache Halbbrücke HB (aus zwei Schaltelementen mit dazwischen liegendem Mittelausgang) zu einer Vollbrücke verschaltet sind.

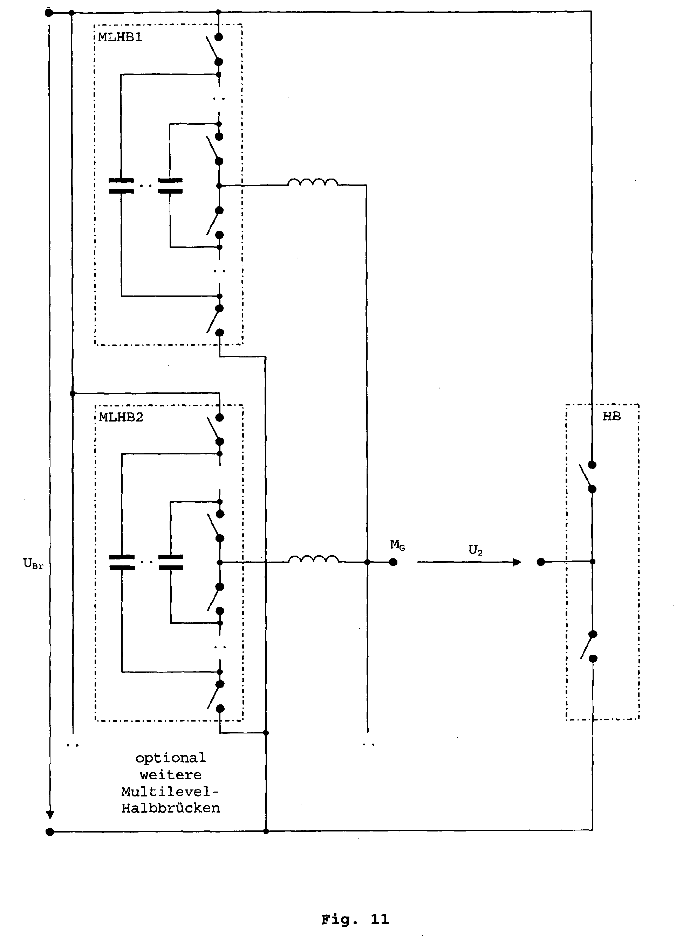

Ferner kann das in Fig. 9 dargestellte System aus einer Mehrzahl an erfindungsgemäßen Multilevel-Halbbrücken im Sinne der Darstellung aus Fig. 11 ebenfalls mit einer einfachen Halbbrücke HB zu einer Vollbrücke verschalten werden, womit - im Vergleich zu der in Fig. 10 dargestellten Vollbrücke - ein nochmals gleichmäßigerer Stromfluss und Energietransport gewährleistet werden kann.

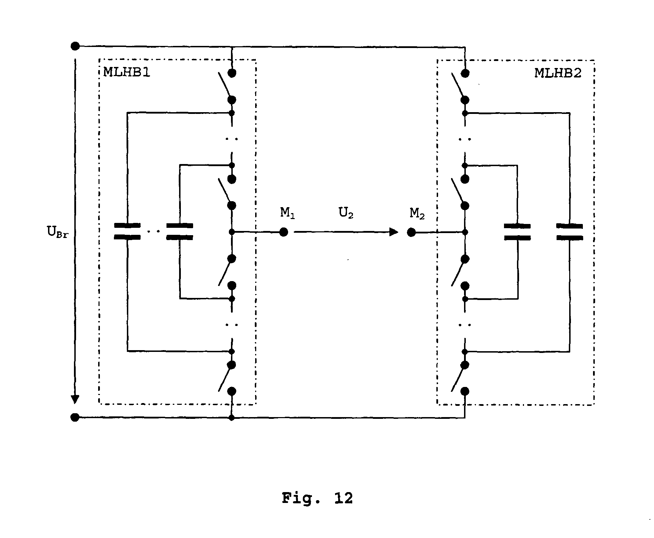

Auch die Schaltungstopologie aus Fig. 12, bei der zwei mit einer gemeinsamen Brückenspannung beaufschlagte Multilevel-Halbbrücken MLHB1, MLHB) zu einer Vollbrücke verschaltet sind und zu einem gegenphasigen Betrieb eingerichtet sind, so dass an den beiden Mittelanschlüssen M1, M2 im Mittel stets die halbe Brückenspannung U_{Br} anliegt, erweist als vorteilhaft, insbesondere da eine solche Vollbrücke gegenüber der Vollbrücke aus Fig. 10 ein besseres EMV-Verhalten mit erheblich geringerer Störaussendung aufweist und zur bipolaren - bezüglich der Brückenspannung U_{Br} - symmetrischen Ansteuerung von Stromquellen und -senken, insbesondere verschiedener Verbraucher wie Transformatoren oder Motoren mit unterschiedlichen Spannungsniveaus dienen kann.

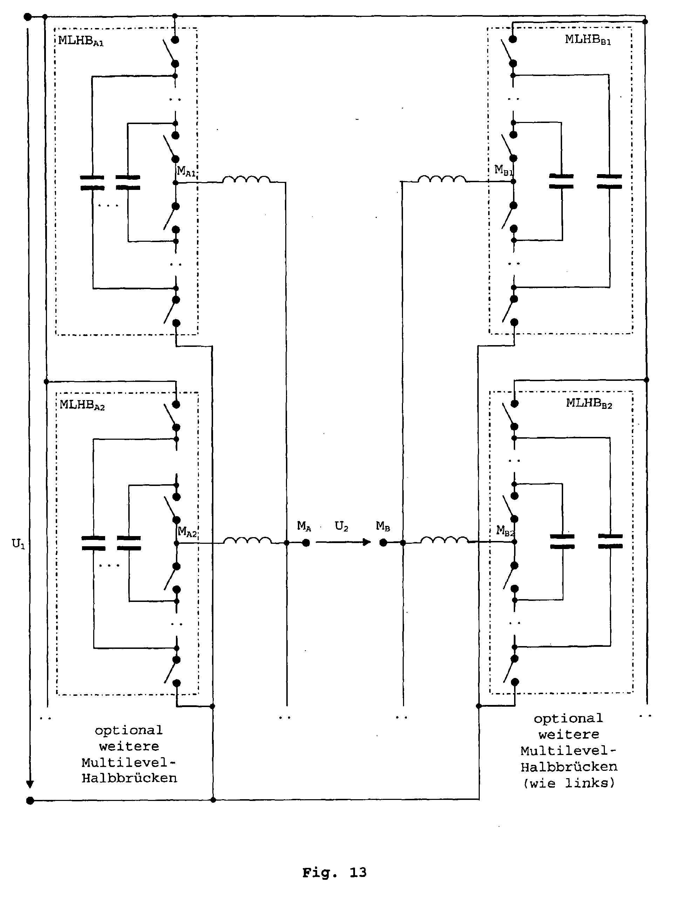

Das System aus Fig. 13, bei welchem eine Mehrzahl an erfindungsgemäßen Multilevel-Halbbrücken zu einer Vollbrücke verschaltet sind, erweist sich demgegenüber bei größeren Leistungen als nochmals überlegen. Dabei sind auf beiden Seiten der Vollbrücke jeweils eine Mehrzahl an Multilevel-Halbbrücken MLHB_{Ai}, MLHB_{Bi} derart parallel verschaltet, dass alle Multilevel-Halbbrücken MLHB_{Ai}, MLHB_{Bi} an einer gemeinsamen Brückenspannung U₁ angeschlossen sind, wobei die Mittelanschlüsse M_{Ai}, M_{Bi} der auf je einer Seite der Vollbrücke angeordneten Multilevel-Halbbrücken MLHB_{Ai}, MLHB_{Bi} jeweils über eine Induktivität an einem gemeinsamen Mittelanschluss M_{A}, M_{B} angeschlossen sind, so dass zwischen den Mittelanschlüssen M_{A}, M_{B} der zwei Seiten der Vollbrücke eine Spannung U₂ anliegt. Die einzelnen Multilevel-Halbbrücken MLHB_{Ai}, MLH_{Bi} sind dabei für einen phasenverschobenen Betrieb eingerichtet, bei dem die Phasenverschiebung zwischen je zwei aufeinanderfolgenden Multilevel-Halbbrücken MLHB_{Ai}, MLHB_{Bi} auf jeder Seite der Vollbrücke bevorzugt jeweils 360°/m ist, wobei m die jeweilige Anzahl an Multilevel-Halbbrücken MLHB_{Ai}, MLHB_{Bi} auf jeder Seite der Vollbrücke ist. Dabei ist dann vorgesehen, dass die auf verschiedenen Seiten der Vollbrücke angeordneten Multilevel-Halbbrücken MLHB_{Ai}, MLHB_{Bi} zu einem gegenphasigen Betrieb eingerichtet sind, so dass an den beiden Mittelanschlüssen M_{A}, M_{B} im Mittel stets die halbe Brückenspannung U₁ anliegt. Auch hier kann vorteilhaft vorgesehen sein, dass einzelne der Multilevel-Halbbrücken optional nicht betrieben werden, um z.B. bei niedriger Leistungsabnahme die Verlustleistung des Systems zu reduzieren.

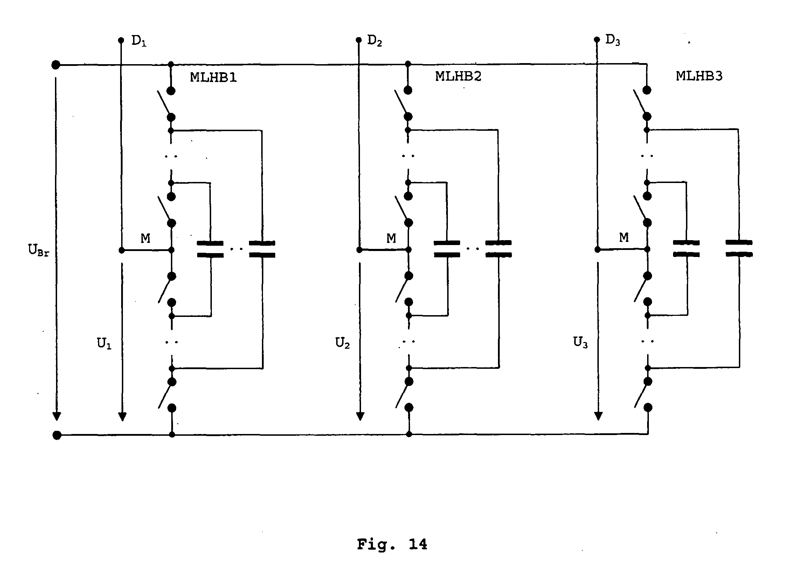

Eine weitere auf der vorliegenden Erfindung aufbauende Schaltungstopologie betrifft das in Fig. 14 dargestellte System, bei dem drei Multilevel-Halbbrücken MLHB1, MLHB2, MLHB3 zu einer Multilevel-Drehstrombrücke verschaltetet sind und welches dadurch gekennzeichnet ist, dass die drei Multilevel-Halbbrücken MLHB1, MLHB2, MLHB3 derart parallel verschaltet sind, dass alle Multilevel-Halbbrücken MLHB1, MLHB2, MLHB3 an einer gemeinsamen Brückenspannung U_{Br} angeschlossen sind, wobei die drei Multilevel-Halbbrücken MLHB1, MLHB2, MLHB3 mit einer Phasenverschiebung von jeweils 120° betrieben werden und wobei die Mittelanschlüsse M der Multilevel-Halbbrücken MLHB1, MLHB2, MLHB3 jeweils einen von drei Drehstromanschlüssen D₁, D₂, D₃ ansteuern. Hierdurch kann ein dreiphasiger Drehstromanschluss angesteuert werden, der somit bidirektional (d.h. als Quelle oder als Senke) und blindleistungsbehaftet betrieben werden kann.

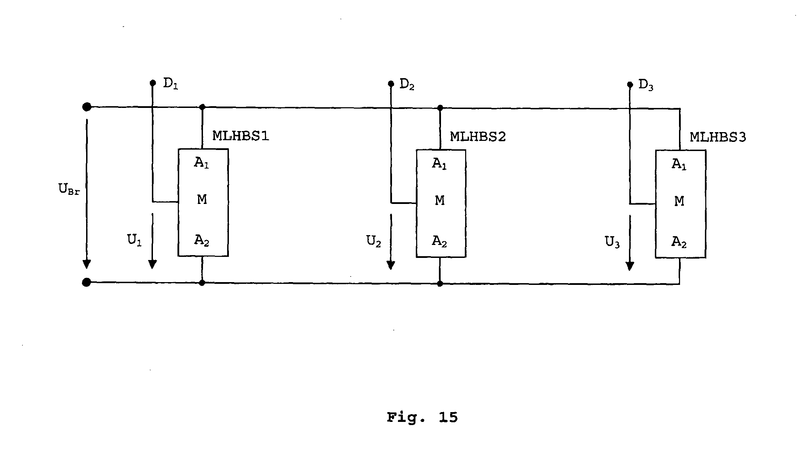

Hinsichtlich der erzielbaren Gleichmäßigkeit von Stromfluss und Energietransport können demgegenüber für größere Leistungen in nochmals verbesserter Art und Weise in Entsprechung der Schaltskizze aus Fig. 15 auch drei - je eine Mehrzahl an erfindungsgemäßen Multilevel-Halbbrücken umfassende- Systeme MLBHS1, MLHBS2, MLHBS3 gemäß Fig. 9 zu einer Multilevel-Drehstrombrücke verschaltet werden, indem die drei Systeme MLBHS1, MLHBS2, MLHBS3 derart parallel verschaltet sind, dass alle Systeme MLBHS1, MLHBS2, MLHBS3) an einer gemeinsamen Brückenspannung U_{Br} angeschlossen sind und indem die drei Systeme MLBHS1, MLHBS2, MLHBS3 relativ zueinander mit einer Phasenverschiebung von jeweils 120° betrieben werden, wobei die Mittelanschlüsse M der drei Systeme MLBHS1, MLHBS2, MLHBS3 jeweils einen von drei Drehstromanschlüssen D₁, D₂, D₃ ansteuern.

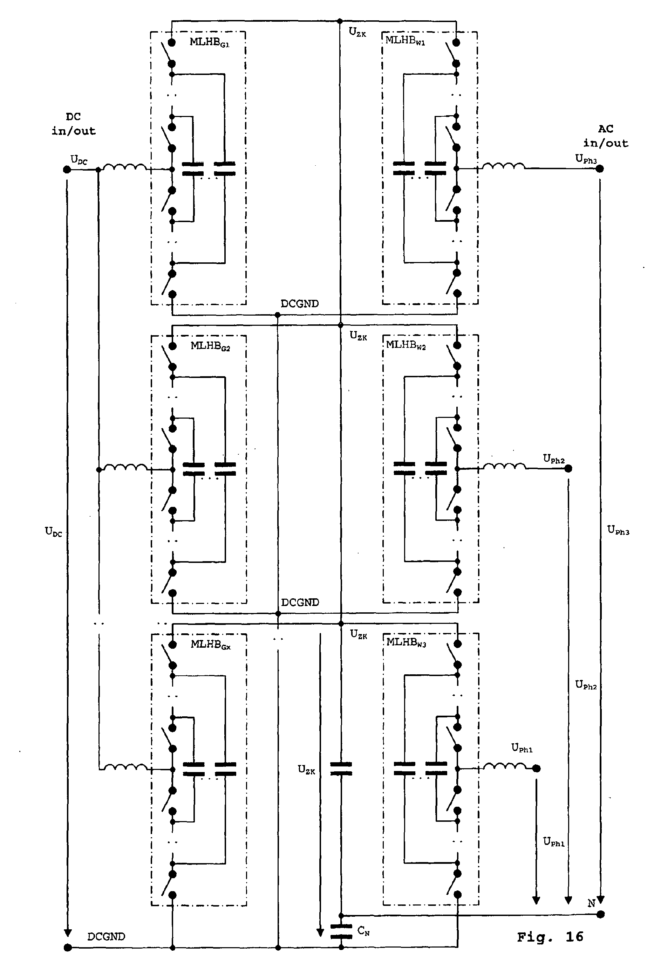

Und schließlich kann mit erfindungsgemäßen Multilevel-Halbbrücken noch ein in vielerlei Hinsicht verbessertes DC/AC-Konverter-System realisiert werden, wie es in Fig. 16 gezeigt ist. Dieses System ist dadurch gekennzeichnet, dass auf der Gleichstromseite (DC) ein oder mehrere als Aufwärtswandler fungierende Multilevel-Halbbrücken MLHB_{G1}, ..., MLHB_{GX} mit jeweils auf Gleichspannungspotential U_{DC} liegendem Mittelanschluss M parallel verschaltet sind und dass die gleichstromseitigen Multilevel-Halbbrücken MLHB_{G1}, ..., MLHB_{GX} im Falle der Verwendung mehrerer gleichstromseitiger Multilevel-Halbbrücken für einen phasenverschobenen Betrieb im bereits vorstehend erläuterten Sinne eingerichtet sind. Auf der Wechselstromseite (AC) sind ein oder mehrere als Abwärtswandler fungierende Multilevel-Halbbrücken MLHB_{W1}, ..., MLHB_{WX} verschaltet. Deren Anschlüsse A₁, A₂ sind jeweils mit der gleichen Zwischenkreisspannung U_{ZK} beaufschlagt, während ihre Mittelanschlüsse M auf einem Wechselspannungspotential U_{Ph1}, U_{Ph2}, U_{Ph3} liegt. Die Zwischenkreisspannung U_{ZK} entspricht der Brückenspannung der gleichstromsseitigen Multilevel-Halbbrücken MLHB_{G1}, ..., MLHB_{GX} und im Falle der Verwendung mehrerer wechselstromseitiger Multilevel-Halbbrücken MLHB_{W1}, ..., MLHB_{WX} können diese als Multilevel-Drehstrombrücke verschaltet und für einen entsprechend phasenverschobenen Betrieb eingerichtet sein. Der in Fig. 16 rechts unten dargestellte Kondensator C_{N} dient der für die DC/AC-Wandlung erforderlichen Nullpunktsverschiebung.

Besondere Vorteile dieses Systems sind der hohe DC-Spannungsbereich (U_{DC}) bis maximal zur Zwischenkreisspannung, die Möglichkeit einer bidirektionalen Energieübertragung von der Gleichspannungsseite (U_{DC}) zur Wechselspannungsseite (U_{Ph1} - U_{Ph3}), die Möglichkeit einer hohen Gleichteileverwendung und Modularisierung der Anordnung und die sich dadurch ergebende gute Eignung als PV-Umrichter, Ladeumrichter, unterbrechungsfreie Stromversorgung (USV), jeweils mit einem weiten, bidirektionalen Spannungsbereich, Blindleistungskompensation und hohem Wirkungsgrad.

## Patentansprüche

1. Verfahren zum Betrieb einer elektrischen Schaltung in Art einer Multilevel-Halbbrücke (MLHB),
wobei die Schaltung eine Verbindung zweier Anschlüsse (A₁, A₂), an denen eine Brückenspannung (D_{Br}) anliegt, über zwei sich in einem Mittelanschluss (M) treffende Zweige (Z1, Z2) aufweist,
wobei am Mittelanschluss (M) gegen das Potential eines der Anschlüsse (A₁, A₂) eine Mittelspannung (U_{M}) anliegt,
wobei die zum Mittelanschluss (M) symmetrisch ausgebildeten Zweige (Z1, Z2) jeweils eine Anzahl n von in Serie geschalteten Schaltelementen (T₁,..., Tₙ; Tₙ₊₁,..., T₂ₙ) aufweisen,
wobei die Verbindungsstellen (Vᵢ; i ∈ {1,..., n-1}) zwischen je zwei benachbarten Schaltelementen (T₁, Tᵢ₊₁) des ersten Zweigs (Z1) jeweils über einen Kondensator (Cᵢ) mit den symmetrisch zum Mittelanschluss (M) gelegenen Verbindungsstellen (Vₙ₊ᵢ) zwischen je zwei Schaltelementen (Tₙ₊ᵢ, Tₙ₊ᵢ₊₁) des zweiten Zweigs verbunden sind, und
wobei die Schaltelemente (T₁, ..., T₂ₙ) unter Einsatz einer Steuereinheit in verschiedene Schaltzustände (Zᵢ) schaltbar sind,
umfassend die folgenden Schritte:
A) Bei vorgegebener Brückenspannung (U_{Br}) Vorgeben einer gewünschten Mittelspannung (U_{M}), die ausschließlich ausgewählt wird aus n+1 verschiedenen Spannungsniveaus (N) entsprechend dem p-fachen Wert des n-ten Teils der Brückenspannung (UM =p/n x U_{Br}), wobei p eine ganze Zahl mit 0 <= p <= n ist, oder
bei vorgegebener Mittelspannung (U_{M}) mit U_{M}≠0 Vorgeben einer gewünschten Brückenspannung (U_{Br}), die ausschließlich ausgewählt wird aus n verschiedenen Spannungsniveaus entsprechend dem n-fachen Wert des p-ten Teils der Mittelspannung (U_{Br} =n/p x U_{M}), wobei p eine ganze Zahl mit 1 <= p <= n ist
B) Betreiben der Schaltung in einem Regelbetrieb, solange nicht gemäß Schritt A) eine neue Mittelspannung (UM) oder eine neue Brückenspannung (U_{Br}) aus den genannten Spannungsniveaus gewählt wird, wobei in dem Regelbetrieb
- anfänglich sämtliche Kondensatoren (Cᵢ) auf ein ganzzahliges Vielfaches des n-ten Teils der Brückenspannung (U_{Br}) geladen werden, so dass die Spannung U_{Ci} an jedem Kondensator (Cᵢ) den Wert U_{Ci}= i/n x U_{Br} annimmt,
- jedes Schaltelement (T₁, ..., T₂ₙ) in geöffnetem Zustand jeweils dem n-ten Teil der Brückenspannung (U_{Br}) ausgesetzt ist, und
- die gewünschte Mittelspannung (UM) oder die gewünschte Brückenspannung (U_{Br}), außer in den Fällen U_{M}=0 oder U_{M}=U_{Br}, durch Realisierung einer in Schaltzyklen gruppierten Abfolge von verschiedenen jeweils die gewünschte Mittelspannung (UM) bzw. die gewünschte Brückenspannung (U_{Br}) bereitstellenden Schaltzuständen (Zᵢ) der Schaltelemente (T₁, ..., T₂ₙ) gehalten wird,
wobei jeder Schaltzyklus eine vorgegebene Anzahl an verschiedenen Schaltzuständen (Zᵢ) umfasst, die bei konstanter Last an der Multilevel-Halbbrücke (MLHB) über einen vollständigen Schaltzyklus jeweils gleich lang und gleich oft aktiv sowie derart gewählt sind, dass in jedem Schaltzyklus jeder Kondensator (C₁, ..., Cₙ₋₁) gleich lange und gleich oft und entladen wird,
**dadurch gekennzeichnet, daß** bei einem Wechsel zwischen zwei benachbarten Spannungsniveaus der Mittelspannung (UM) oder der Brückenspannung (U_{Br}) der erste für das neue Spannungsniveau einzustellende Schaltzustand (Zᵢ) in Abhängigkeit von dem zuvor für das andere Spannungsniveau eingestellten Schaltzustand (Zⱼ) so gewählt wird, dass beim Wechsel zwischen den genannten Schaltzuständen jeweils nur ein Schaltelement (T₁, ..., Tₙ; Tₙ₊₁, ..., T₂ₙ) pro Zweig (Z1, Z2) umgeschaltet wird.

2. Verfahren nach Anspruch 1,
**dadurch gekennzeichnet,**
**dass** in Schritt B) zu jedem vorgegebenen Spannungsniveau der Mittelspannung (UM) oder der Brückenspannung (U_{Br}), außer für UM = 0 und UM = U_{Br}, jeder Schaltzyklus exakt n Schaltzustände umfasst, die so gewählt sind,
**dass** bei konstanter Last am Mittelausgang in jedem Schaltzyklus jeder Kondensator (C₁, ..., Cₙ₋₁) genau einmal be- und einmal entladen wird und dass in jedem Schaltzustand eines Schaltzyklus jeweils maximal zwei Kondensatoren gleichzeitig be-und/oder entladen werden.

3. Verfahren nach Anspruch 1 oder 2,
**dadurch gekennzeichnet,**
**dass** die Reihenfolge der Schaltzustände (Zᵢ) innerhalb eines Schaltzyklus derart gewählt ist, dass beim Wechsel zwischen zwei aufeinanderfolgenden Schaltzuständen (Zᵢ) eines Spannungsniveaus jeweils immer nur maximal zwei Schaltelemente (T₁, ..., Tₙ; Tₙ₊₁, ..., T₂ₙ) je Zweig (Z1, Z2) ein- und/oder ausgeschaltet werden.

4. Verfahren nach einem der Ansprüche 1 bis 3,
**dadurch gekennzeichnet,**
**dass** beim wiederholten Wechsel zwischen zwei benachbarten Spannungsniveaus jeweils ein anderes Schaltelement (T₁, ..., T₂ₙ) als beim vorherigen Wechsel pro Zweig (Z1, Z2) umgeschaltet wird.

5. Verfahren nach einem der Ansprüche 1 bis 4,
**dadurch gekennzeichnet,**
**dass** in Schritt B) in jedem für ein bestimmtes Spannungsniveau vorgesehenen Schaltzyklus der Reihe nach die von der gewählten Mittelspannung (UM) bzw. der gewählten Brückenspannung (U_{Br}) abhängigen Schaltzustände (Z₁, ..., Zₙ) gemäß der Tabelle in Figur 2 verwendet werden.

6. Verfahren nach Anspruch 5,
**dadurch gekennzeichnet,**
**dass** zum Wechsel zwischen je zwei benachbarten Spannungsniveaus jeweils nur ein Schaltelement (T₁, ... T₂ₙ) pro Zweig (Z1, Z2) umgeschaltet wird, wobei
- entweder beim Wechsel auf das nächst höhere Spannungsniveau der Schaltzustand (Zᵢ) beibehalten wird und beim Wechsel auf das nächst niedrigere Spannungsniveau der Schaltzustand um eins auf den Schaltzustand (Zᵢ₊₁) erhöht wird, wobei (Zₙ₊₁) zu (Z₁) definiert wird,
- oder beim Wechsel auf das nächst höhere Spannungsniveau der Schaltzustand (Zᵢ) um eins auf den Schaltzustand (Zᵢ₋₁) erniedrigt wird, wobei (Z₀) zu (Zₙ) definiert wird, und beim Wechsel auf das nächst kleinere Spannungsniveau der Schaltzustand (Zᵢ) beibehalten wird.

7. Verfahren nach einem der Ansprüche 1 - 6,
**dadurch gekennzeichnet,**
**dass** in Schritt B) während der verschiedenen Schaltzustände (Zᵢ) eines Spannungszyklus jeweils die exakte Brückenspannung (U_{Br}) und die exakte Mittelspannung (U_{M}) gemessen werden und daraus nach dem Durchlaufen von n-1 unterschiedlichen Schaltzuständen (Zᵢ) über ein lineares Gleichungssystem alle Kondensatorspannungen (U_{Ci}) errechnet werden.

8. Verfahren nach Anspruch 7,
**dadurch gekennzeichnet,**
**dass** der durch die Halbbrücke fließende Strom mittels einer Strommessvorrichtung (M₃) am Mittelanschluss oder je einer an den zu den Anschlüssen (A₁, A₂) führenden Enden der beiden Halbbrückenzweige (Z1, Z2) angeordneten Strommessvorrichtung (M₁; M₂) gemessen wird und
**dass** daraus die Kondensatorumladungen während eines Schaltzyklus durch diskrete Integration (ΔU = l / C x Δt) berechnet werden.

9. Verfahren nach einem der Ansprüche 7 oder 8,
**dadurch gekennzeichnet,**
**dass** die berechneten Werte für die Kondensatorspannungen (U_{Ci}) und/oder die berechneten Werte für die Kondensatorumladungen, im Falle einer Abweichung von den Sollwerten (U_{Ci}= i/n x U_{Br}), zu einer adaptiven Änderung der Reihenfolge und/oder der Länge der Schaltzustände (Zᵢ) herangezogen wird.

10. Verfahren nach einem der Ansprüche 1 bis 9,
**dadurch gekennzeichnet,**
**dass** parallel zu den Schaltelementen (T₁, ..., T₂ₙ) Ausgleichswiderstände (R₁, ..., R₂ₙ), Varistoren oder aktive Schaltungsteile angeordnet sind, so dass eine im Wesentlichen gleichmäßige Ladung der Kondensatoren (C₁, ..., Cₙ₋₁) und Verteilung der an den einzelnen Schaltelementen (T₁, ..., T₂ₙ) anliegenden Sperrspannung bei geöffnetem Schaltelement (T₁, ..., T₂ₙ) erreicht wird,
wobei bevorzugt bei Einspeisung einer gegebenen Brückenspannung (U_{Br}) eine Anlaufschaltung A zwischen der aus den Schaltelementen (T₁, ..., T₂ₙ) gebildeten Halbbrücke und der gegebenen Brückenspannung (U_{Br}) und/oder bei Einspeisung einer gegebenen Mittelanschlussspannung (U_{M}) eine Anlaufschaltung B zwischen dem Mittelanschluss (M) der Halbbrücke und der gegebenen Mittelspannung (UM) angeordnet ist, über welche die Multilevel-Halbbrücke langsam bzw. schrittweise auf die Betriebsspannung gebracht wird, um eine Überschreitung der zulässigen Sperrspannung an den Schaltelementen, insbesondere den äußeren Schaltelementen Tₙ und T₂ₙ, zu vermeiden.

11. Verfahren nach einem der Ansprüche 1 bis 10,
**dadurch gekennzeichnet,**
**dass** ein Zero-Voltage-Switching (spannungsfreies Einschalten) und/oder Zero-Current-Switching (stromloses Ausschalten) der Schaltelemente (T₁, ..., T₂ₙ) realisiert wird, indem insbesondere unter Nutzung parasitärer und/oder gezielt eingebrachter Kapazitäten in Verbindung mit einer am Mittelanschluss (M) angeschlossenen Induktivität und/oder parasitären Streuinduktivität
- der Schaltzeitpunkt zum Schließen der Schaltelemente (T₁, ..., T₂ₙ) so gewählt wird, dass zu diesem Zeitpunkt die Spannung an dem zu schließenden Schaltelement Null oder nahe Null ist, womit kapazitive Einschaltverluste vermindert werden, und/oder
- der Schaltzeitpunkt zum Öffnen der Schaltelemente (T₁, ..., T₂ₙ) bei resonantem oder lückendem Betrieb oder an der Grenze zum lückenden Betrieb so gewählt wird, dass zu diesem Zeitpunkt der Strom an dem zu öffnenden Schaltelement nahe Null ist, womit ohmsche Ausschaltverluste verhindert werden.

12. Verfahren mit Zero-Voltage-Switching gemäß Anspruch 11,
**dadurch gekennzeichnet,**
**dass** beim Öffnen eines zuvor geschlossenen Schaltelements (T₁,..., T₂ₙ) der Verlauf der Mittelspannung (UM) zeitlich hinreichend hochauflösend gemessen, mit der rechnerisch zu erwartenden Spannung des zu aktivierenden Spannungsniveaus verglichen und daraus eine Schaltverzögerung sowie der Schaltzeitpunkt für ein zu schließendes Schaltelement (T₁, ..., T₂ₙ) derart ermittelt wird, dass zu diesem Schaltzeitpunkt die Spannung an dem zu schließenden Schaltelement (T₁, ..., T₂ₙ) Null oder nahe Null ist.

13. Verfahren mit Zero-Current-Switching nach Anspruch 11,
**dadurch gekennzeichnet,**
**dass** der durch die Halbbrücke fließende Strom mittels einer Strommessvorrichtung (M3) am Mittelanschluss oder je einer an den zu den Anschlüssen (A₁, A₂) führenden Enden der beiden Halbbrückenzweige (Z1, Z2) angeordneten Strommessvorrichtung (M1; M2) so hochauflösend gemessen wird, dass daraus der Stromverlauf durch jedes Schaltelement (T₁, ..., T₂ₙ) bekannt ist, wobei aus diesem Stromverlauf eine Schaltverzögerung und der Schaltzeitpunkt für das zu öffnende Schaltelement (T₁, ..., T₂ₙ) bei resonantem oder lückendem Betrieb oder an der Grenze zum lückenden Betrieb so ermittelt wird, dass zu diesem Schaltzeitpunkt der Strom an dem zu öffnenden Schaltelement (T₁, ..., T₂ₙ) Null oder nahe Null ist.

14. Verfahren mit Zero-Voltage- und/oder Zero-Current-Switching nach einem der Ansprüche 11 - 13,
**dadurch gekennzeichnet,**
**dass** aus den in einem bestimmten zeitlichen Raster gemessenen Spannungs-und/oder Stromwerten rechnerisch durch Interpolation, Mittelwertbildung und/oder (Fast-)Fourier-Transformation ein der Realität nahe kommender Spannungs-und/oder Stromverlauf ermittelt und
dieser zur Ermittlung der Schaltverzögerung und des Schaltzeitpunkts des zu schaltenden Schaltelements (T₁, ..., T₂ₙ) verwendet wird.

15. Verfahren nach Anspruch 11,
**dadurch gekennzeichnet,**
**dass** der Spannungs- und/oder Stromverlauf an den zu schaltenden Schaltelementen (T₁, ..., T₂ₙ) unter Berücksichtigung bekannter, ggf. parasitärer, Induktivitäts-und/oder Kapazitätswerte und den bekannten Spannungsniveaus berechnet und dass dieser zur Ermittlung der Schaltverzögerung und des Schaltzeitpunkts des zu schaltenden Schaltelements (T₁, ..., T₂ₙ) verwendet wird,
wobei optional eine rechnerische Berücksichtigung des Einflusses von Temperatur und/oder Spannung auf die wirkenden Induktivitäts- und Kapazitätswerte erfolgt.

16. Verfahren nach Anspruch 11,
**dadurch gekennzeichnet,**
**dass** die zum Zero-Voltage-Switching und/oder Zero-Current-Switching erforderliche Schaltverzögerung für die zu schaltenden Schaltelemente (T₁, ..., T₂ₙ) in der Schaltung fest vorgegeben ist,
und zwar entweder schaltungstechnisch in der Schaltung oder durch Hinterlegung in einem in die Schaltung integrierten oder mit der Schaltung verbundenen Speicherelement,
wobei die Schaltverzögerung optional unter Berücksichtigung des Einflusses der Brückenspannung, einzelner oder mehrerer Kondensatorspannungen, des Stroms an den Anschlüssen der Halbbrücke und/oder der Temperatur der relevanten Bauelemente mittels einer Wertetabelle, in der die von diesen Einflussparametern abhängigen Werte zur Steuerung der Schaltverzögerungen für das Öffnen und/oder Schließen der Schaltelemente (T₁, ..., T₂ₙ) hinterlegt sind, vorgegeben ist.

17. Elektrische Schaltung in Art einer Multilevel-Halbbrücke (MLHB),
wobei die Schaltung eine Verbindung zweier Anschlüsse (A₁, A₂), an denen eine Brückenspannung (U_{Br}) anliegt, über zwei sich in einem Mittelanschluss (M) treffende Zweige (Z1, Z2) aufweist,
wobei am Mittelanschluss (M) gegen das Potential eines der Anschlüsse (A₂) eine Mittelspannung (U_{M}) anliegt,
wobei die zum Mittelanschluss (M) symmetrisch ausgebildeten Zweige (Z1, Z2) jeweils eine Anzahl n von in Serie geschalteten Schaltelementen (T₁,..., Tₙ; Tₙ₊₁,..., T₂ₙ) aufweisen,
wobei die Verbindungsstellen (Vᵢ; i ∈ {1,..., n-1}) zwischen je zwei benachbarten Schaltelementen (Tᵢ, Tᵢ₊₁) des ersten Zweigs (Z1) jeweils über einen Kondensator (Cᵢ) mit den symmetrisch zum Mittelanschluss (M) gelegenen Verbindungsstellen (Vₙ₊ᵢ) zwischen je zwei Schaltelementen (Tₙ₊ᵢ, Tₙ₊ᵢ₊₁) des zweiten Zweigs verbunden sind, und
wobei die Schaltelemente (T₁, ..., T₂ₙ) unter Einsatz einer Steuereinheit in verschiedene Schaltzustände (Zᵢ) schaltbar sind,
**dadurch gekennzeichnet,**
**dass** die Schaltung, insbesondere deren Steuereinheit, zur Durchführung eines Verfahrens oder mehrerer Verfahren gemäß den Ansprüchen 1-16 eingerichtet ist.

18. Multilevel-Halbbrücke (MLHB) gemäß Anspruch 17 mit einer am Mittelanschluss (M) angeschlossenen Induktivität (L), wobei diese Anordnung
- als Abwärtswandler betrieben wird, indem eine Eingangsspannung als Brückenspannung (U_{Br}) an den äußeren Anschlüssen (A₁, A₂) der Halbbrücke eingespeist und in eine kleinere Ausgangsspannung (U_{A}) an dem nicht mit der Halbbrücke verbundenen zweiten Anschluss der Induktivität entnommen wird, oder
- als Aufwärtswandler betrieben wird, indem eine Eingangsspannung (U_{E}) an dem nicht mit der Halbbrücke verbundenen zweiten Anschluss der Induktivität eingespeist und eine größere Ausgangsspannung (U_{Br}) an den äußeren Anschlüssen (A₁, A₂) der Halbbrücke entnommen wird, oder
- als Inverter betrieben wird, indem an einem der beiden äußeren Anschlüssen (A₁, A₂) der Halbbrücke eine Eingangsspannung (U_{E}) und an dem anderen der äußeren Anschlüssen (A₁, A₂) eine Ausgangsspannung (U_{A}) mit umgekehrter Polarität zur Eingangsspannung entnommen wird.

19. System aus zwei Multilevel-Halbbrücken (MLHB1, MLHB2) gemäß Anspruch 17,
**dadurch gekennzeichnet,**
**dass** die zwei Multilevel-Halbbrücken (MLHB1, MLHB2) über ihre jeweiligen Mittelanschlüsse (M) mit einer gemeinsamen Induktivität (L) verbunden sind, wobei beide Multilevel-Halbbrücken (MLHB1, MLHB2) als Auf- oder Abwärtswandler betreibbar sind, so dass das System als bidirektionaler Auf- und Abwärtswandler zur Konvertierung variabler Eingangsspannungen (U₁; U₂) in variable Ausgangsspannungen (U₂; U₁) einsetzbar ist.

20. System aus einer Mehrzahl an Multilevel-Halbbrücken (MLHB) gemäß Anspruch 17, **dadurch gekennzeichnet,**
**dass** die Multilevel-Halbbrücken (MLHB1, MLHB2, ..., MLHBm) derart parallel verschaltet sind, dass deren jeweilige Anschlüsse (A₁, A₂) mit einer gemeinsamen Brückenspannung (U_{Br}) beaufschlagt sind und dass deren jeweilige Mittelanschlüsse (M) über je eine Induktivität (L) mit einem gemeinsamen Mittelanschluss (M_{G}) verbunden sind, und
**dass** die einzelnen Multilevel-Halbbrücken (MLHB1, MLHB2, ..., MLHBm) für einen phasenverschobenen Betrieb eingerichtet sind, bei dem die Phasenverschiebung zwischen je zwei aufeinanderfolgenden Multilevel-Halbbrücken (MLHB1, MLHB2, ..., MLHBm) bevorzugt jeweils 360°/m ist, wobei m die Anzahl an Multilevel-Halbbrücken (MLHB1, MLHB2, ..., MLHBm) ist.

21. System aus einer Multilevel-Halbbrücke (MLHB) gemäß Anspruch 17 und einer einfachen Halbbrücke (HB) umfassend zwei Schaltelemente,
**dadurch gekennzeichnet,**
**dass** die Multilevel-Halbbrücke (MLHB) und die einfache Halbbrücke (HB) zu einer Vollbrücke verschaltet sind.

22. System aus einer Mehrzahl an Multilevel-Halbbrücken (MLHB) gemäß Anspruch 17 und einer einfachen Halbbrücke (HB) umfassend zwei Schaltelemente,
**dadurch gekennzeichnet,**
**dass** diese Multilevel-Halbbrücken (MLHB1, ..., MLHBm) ein System gemäß Anspruch 20 bilden, welches seinerseits mit der einfachen Halbbrücke (HB) zu einer Vollbrücke verschaltet ist.

23. System aus zwei Multilevel-Halbbrücken (MLHB1, MLHB2) gemäß Anspruch 17,
**dadurch gekennzeichnet,**
**dass** die zwei Multilevel-Halbbrücken (MLHB1, MLHB2) zu einer Vollbrücke verschaltet sind und zu einem gegenphasigen Betrieb eingerichtet sind, so dass an den beiden Mittelanschlüssen (M1, M2) im Mittel stets die halbe Brückenspannung (U_{Br}) anliegt.

24. System aus einer Mehrzahl an zu einer Vollbrücke verschalteten Multilevel-Halbbrücken gemäß Anspruch 17,
**dadurch gekennzeichnet,**
**dass** auf beiden Seiten der Vollbrücke jeweils eine Mehrzahl an Multilevel-Halbbrücken (MLHB_{Ai}; MLHB_{Bi}) derart parallel verschaltet sind, dass alle Multilevel-Halbbrücken (MLHB_{Ai}: MLHB_{Bi}) an einer gemeinsamen Brückenspannung (U₁) angeschlossen sind, wobei die Mittelanschlüsse (M_{Ai}; M_{Bi}) der auf je einer Seite der Vollbrücke angeordneten Multilevel-Halbbrücken (MLHB_{Ai}; MLHB_{Bi}) jeweils über eine Induktivität an einem gemeinsamen Mittelanschluss (M_{A}; M_{B}) angeschlossen sind, so dass zwischen den Mittelanschlüssen (M_{A}; M_{B}) der zwei Seiten der Vollbrücke eine Spannung (U₂) anliegt,
wobei die einzelnen Multilevel-Halbbrücken (MLHB_{Ai}; MLH_{Bi}) für einen phasenverschobenen Betrieb eingerichtet sind, bei dem die Phasenverschiebung zwischen je zwei aufeinanderfolgenden Multilevel-Halbbrücken (MLHB_{Ai}; MLHB_{Bi}) auf jeder Seite der Vollbrücke bevorzugt jeweils 360°/m ist, wobei m die jeweilige Anzahl an Multi-level-Halbbrücken (MLHB_{Ai}; MLHB_{Bi}) ist, und
wobei die auf verschiedenen Seiten der Vollbrücke angeordneten Multilevel-Halbbrücken (MLHB_{Ai}; MLHB_{Bi}) zu einem gegenphasigen Betrieb eingerichtet sind, so dass an den beiden Mittelanschlüssen (M_{A}; M_{B}) im Mittel stets die halbe Brückenspannung (U₁) anliegt.

25. System aus drei zu einer Multilevel-Drehstrombrücke verschalteten Multilevel-Halbbrücken (MLHB1, MLHB2, MLHB3) gemäß Anspruch 17,
**dadurch gekennzeichnet,**
**dass** die drei Multilevel-Halbbrücken (MLHB1, MLHB2, MLHB3) derart parallel verschaltet sind, dass alle Multilevel-Halbbrücken (MLHB1, MLHB2, MLHB3) an einer gemeinsamen Brückenspannung (U_{Br}) angeschlossen sind, wobei die drei Multilevel-Halbbrücken (MLHB1, MLHB2, MLHB3) mit einer Phasenverschiebung von jeweils 120° betrieben werden und wobei die Mittelanschlüsse (M) der Multilevel-Halbbrücken (MLHB1, MLHB2, MLHB3) jeweils einen von drei Drehstromanschlüssen (D₁, D₂, D₃) ansteuern.

26. System aus drei zu einer Multilevel-Drehstrombrücke verschalteten Systemen (MLBHS1; MLHBS2; MLHBS3) gemäß Anspruch 20 aus jeweils einer Mehrzahl an Multilevel-Halbbrücken (MLHB) gemäß Anspruch 17,
**dadurch gekennzeichnet,**
**dass** die drei Systeme (MLBHS1; MLHBS2; MLHBS3) derart parallel verschaltet sind, dass alle Systeme (MLBHS1; MLHBS2; MLHBS3) an einer gemeinsamen Brückenspannung (U_{Br}) angeschlossen sind, wobei die drei Systeme (MLBHS1; MLHBS2; MLHBS3) relativ zueinander mit einer Phasenverschiebung von jeweils 120° betrieben werden und wobei die Mittelanschlüsse (M) der drei Systeme (MLBHS1; MLHBS2; MLHBS3) jeweils einen von drei Drehstromanschlüssen (D₁, D₂, D₃) ansteuern.

27. Multilevel-DC/AC-Konverter-System,
**dadurch gekennzeichnet,**
**dass** auf der Gleichstromseite (DC) ein oder mehrere als Aufwärtswandler fungierende Multilevel-Halbbrücken (MLHB_{G1}, ..., MLHB_{GX}) gemäß Anspruch 18 mit jeweils auf Gleichspannungspotential (U_{DC}) liegendem Mittelanschluss (M) parallel verschaltet sind, wobei die gleichstromseitigen Multilevel-Halbbrücken (MLHB_{G1}, ..., MLHB_{GX}) im Falle der Verwendung mehrerer gleichstromseitiger Multilevel-Halbbrücken für einen phasenverschobenen Betrieb im Sinne des Anspruchs 20 eingerichtet sind, und
**dass** auf der Wechselstromseite (AC) ein oder mehrere als Abwärtswandler fungierende Multilevel-Halbbrücken (MLHB_{W1}, ..., MLHB_{WX}) gemäß Anspruch 18 derart verschaltet sind, dass deren Anschlüsse (A₁, A₂) jeweils mit der gleichen Zwischenkreisspannung (U_{ZK}) beaufschlagt sind und dass deren Mittelanschluss (M) auf einem Wechselspannungspotential (U_{Ph1}, U_{Ph2}, U_{Ph3}) liegt, wobei die Zwischenkreisspannung (U_{ZK}) der Brückenspannung der gleichstromsseitigen Multilevel-Halbbrücken (MLHB_{G1}, ..., MLHB_{GX}) entspricht, wobei im Falle der Verwendung mehrerer wechselstromseitiger Multilevel-Halbbrücken (MLHB_{W1}, ..., MLHB_{WX}) diese als Multilevel-Drehstrombrücke im Sinne der Ansprüche 24 oder 25 verschaltet und für einen entsprechend phasenverschobenen Betrieb eingerichtet sind und wobei optional, falls benötigt, ein wechselstromseitiger Nullpunkt (N) für die Wechselspannungspotentiale (U_{Ph1}, U_{Ph2}, U_{Ph3}) bevorzugt durch die Reihenschaltung zweier Kondensatoren an der Zwischenkreisspannung (U_{ZK}) und die Verbindung mit der Verbindungsstelle dieser beiden Kondensatoren gebildet wird.

28. Verwendung einer elektrischen Schaltung in Art einer Multilevel-Halbbrücke (MLHB) gemäß Anspruch 17 in einer Motorsteuerung, einem Um- oder Wechselrichter, einem Leistungsnetzteil, einem DC/DC-Umsetzer oder in einer Ladeapplikation.

## Claims

1. A method for the operation of an electrical circuit in the form of a multilevel half-bridge (MLHB), wherein
the circuit connects two terminals (A₁, A₂), across which is applied a bridge voltage (U_{Br}), via two branches (Z1, Z2), meeting at a central terminal (M), wherein
on the central terminal (M) a central voltage (U_{M}) is applied counter to the potential of one of the terminals (A₁, A₂), wherein
the branches (Z1, Z2), which are designed symmetrically with respect to the central terminal (M), in each case have a total of n switching elements (T₁, ..., Tₙ, Tₙ₊₁, ..., T₂ₙ) connected in series, wherein
the connecting points (Vᵢ; i∈{1,..., n-1}) between each pair of adjacent switching elements (Ti, Tᵢ₊₁) of the first branch (Z1) are connected in each case via a capacitor (Cᵢ) with the connecting points (Vₙ₊ᵢ) , located symmetrically with respect to the central terminal (M), between each pair of switching elements (T_{n+I}, Tₙ₊ᵢ₊₁) of the second branch, and wherein
the switching elements (T₁, ..., T₂ₙ) can be switched into various switching states (Zᵢ) with the aid of a control unit,
comprising the following steps:
A) With a prescribed bridge voltage (U_{Br}), definition of a desired central voltage (U_{M}), which is exclusively selected from n+1 different voltage levels (N) corresponding to p-times the value of the n-th part of the bridge voltage (U_{M} =p/n x U_{Br}) , wherein
p is a whole number, where 0 ≤ p ≤ n, or
with a prescribed central voltage (U_{M}) , where U_{M} ≠ 0, definition of a desired bridge voltage (U_{Br}), which is exclusively selected from n different voltage levels corresponding to n-times the value of the p-th part of the bridge voltage (U_{Br} = n/p x U_{M}) , wherein
p is a whole number, where 1 ≤ p ≤ n
B) Normal operation of the circuit, as long as a new central voltage (U_{M}) or a new bridge voltage (U_{Br}) is not selected in accordance with step A) from the voltage levels cited, wherein
in normal operation:
- initially all capacitors (Cᵢ) are charged up to a whole number multiple of the nth part of the bridge voltage (U_{Br}), so that the voltage U_{Ci} on each capacitor (Cᵢ) assumes the value U_{Ci} = i/n x U_{Br},
- each switching element (T₁, ..., T₂ₙ) in the open state is exposed to the n-th part of the bridge voltage (U_{Br}), and
- the desired central voltage (U_{M}) or the desired bridge voltage (U_{Br}), apart from the cases in which U_{M} = 0 or U_{M} = U_{Br}, is maintained by implementation of a sequence, grouped in switching cycles, of various switching states (Zᵢ) of the switching elements (T₁, ..., T₂ₙ) , providing in each case the desired central voltage (U_{M}) or the desired bridge voltage (U_{Br}), wherein each switching cycle comprises a prescribed number of different switching states (Zᵢ), which with a constant load on the multilevel half-bridge (MLHB) are in each case active over a complete switching cycle for an equally long time, and equally often, and are selected such that in each switching cycle each capacitor (C₁, ..., Cₙ₋₁) is charged and discharged for an equally long time and equally often,
**characterised in that**,
in each changeover between two adjacent voltage levels of the central voltage (U_{M}) or the bridge voltage (U_{Br}) , the first switching state (Zᵢ) to be set for the new voltage level is selected as a function of the switching state (Zⱼ) previously set for the other voltage level, such that with the changeover between the cited switching states only one switching element (T₁, ..., Tₙ; Tₙ₊₁...., T₂ₙ) per branch (Z1, Z2) is switched over in each case.

2. The method in accordance with Claim 1,
**characterised in that**,
in step B) , for each prescribed voltage level of the central voltage (U_{M}) or the bridge voltage (U_{Br}), apart from U_{M} = 0 and U_{M} = U_{Br}, each switching cycle comprises exactly n switching states, which are selected such that with constant load on the central output in each switching cycle each capacitor (C₁, ..., Cₙ₋₁) is charged up just once and discharged just once, and such that in each switching state of a switching cycle a maximum of two capacitors are charged up and/or discharged at the same time in each case.

3. The method in accordance with Claim 1 or 2,
**characterised in that**,
the sequence of the switching states (Zᵢ) within one switching cycle is selected such that when changing over between two consecutive switching states (Zᵢ) of a voltage level in each case a maximum of only two switching elements (T₁, ... ,Tₙ; Tₙ₊₁, ..., T₂ₙ) per branch (Z1, Z2) are ever switched on and/or off.

4. The method in accordance with one of the Claims 1 to 3,
**characterised in that**,
in the case of a repeated changeover between two adjacent voltage levels in each case a switching element (T₁, ..., T₂ₙ) is switched over that is other than that in the previous changeover per branch (Z1, Z2).

5. The method in accordance with one of the Claims 1 to 4,
**characterised in that**,
in step B) in each switching cycle provided for a particular voltage level, the switching states (Z₁, ..., Zₙ), which are functions of the selected central voltage (U_{M}) or the selected bridge voltage (U_{Br}), are used in sequence in accordance with the table in Figure 2.

6. The method in accordance with Claim 5,
**characterised in that**,
for purposes of changeover between each pair of adjacent voltage levels only one switching element (T₁, ..., T₂ₙ) per branch (Z1, Z2) is switched over in each case, wherein
- either, when changing over to the next higher voltage level the switching state (Zᵢ) is maintained, and when changing over to the next lower voltage level the switching state is increased by 1 to the switching state (Zᵢ₊₁), wherein
(Zₙ₊₁) is defined as (Z₁),
- or when changing over to the next higher voltage level the switching state (Zᵢ) is lowered by 1 to the switching state (Zᵢ₋₁), wherein
(Z₀) is defined as (Zₙ), and when changing over to the next lower voltage level the switching state (Zᵢ) is maintained.

7. The method in accordance with one of the Claims 1 to 6,
**characterised in that**,
in step B), during the various switching states (Zᵢ) of a voltage cycle, the exact bridge voltage (U_{Br}) and the exact central voltage (U_{M}) are measured in each case, and after passing through n-1 different
switching states (Zᵢ) all capacitor voltages (U_{Ci}) are calculated from these measurements using a linear system of equations.

8. The method in accordance with Claim 7,
**characterised in that**,
the current flowing through the half-bridge is measured by means of a current measurement device (M₃) on the central terminal, or by means of a current measurement device (M₁; M₂) arranged on one of the ends of the two half-bridge branches (Z1, Z2) leading to the terminals (A₁, A₂),
and **in that**
from these measurements the capacitor charge reversals during one switching cycle are calculated by means of discrete integration (ΔU = I/C x Δt).

9. The method in accordance with one of the Claims 7 or 8,
**characterised in that**,
in the event of a deviation from the set-point values (U_{Ci} = i/n x U_{Br}), the values calculated for the capacitor voltages (U_{Ci}), and/or the values calculated for the capacitor charge reversals, are used for purposes of an adaptive alteration of the sequence and/or the length of the switching states (Zᵢ).

10. The method in accordance with one of the Claims 1 to 9,
**characterised in that**,
balancing resistances (R₁, ..., R₂ₙ), varistors, or active circuit components, are arranged in parallel with the switching elements (T₁, ..., T₂ₙ) such that an essentially even charging of the capacitors (C₁, ..., Cₙ₋₁) is achieved, as is an even distribution of the cut-off voltage applied to the individual switching elements (T₁, ..., T₂ₙ) when a switching element (T₁, ..., T₂ₙ) is open, wherein
when feeding in a given bridge voltage (U_{Br}) a starting circuit A is preferably arranged between the half-bridge formed from the switching elements (T₁, ..., T₂ₙ) and the given bridge voltage (U_{Br}), and/or when feeding in a given central terminal voltage (U_{M}) a starting circuit B is preferably arranged between the central terminal (M) of the half-bridge and the given central voltage (U_{M}), by means of which the multilevel half-bridge is slowly, i.e. step-by-step, brought up to the operating voltage in order to avoid exceedance of the permissible cut-off voltage on the switching elements, in particular on the outer switching elements Tₙ and T₂ₙ.

11. The method in accordance with one of the Claims 1 to 10,
**characterised in that**,
a zero-voltage switching and/or a zero-current switching of the switching elements (T₁, ..., T₂ₙ) is implemented, **in that** in particular with the utilisation of parasitic capacitances and/or capacitances specifically introduced, in conjunction with an inductance connected to the central terminal (M) and/or a parasitic leakage inductance
- the switching time-point for closure of the switching elements (T₁, ..., T₂ₙ) is selected such that at this time-point the voltage at the switching element to be closed is zero or near-zero, as a result of which capacitive switch-on losses are reduced, and/or
- the switching time-point for opening of the switching elements (T₁, ..., T₂ₙ) with resonant or intermittent operation, or at the threshold to intermittent operation, is selected such that at this time-point the current at the switching element to be opened is near-zero, as a result of which ohmic switch-off losses are inhibited.

12. The method with zero-voltage switching in accordance with Claim 11,
**characterised in that**,
when opening a previously closed switching element (T₁, ..., T₂ₙ) the time-wise profile of the central voltage (U_{M}), measured with a sufficiently high resolution, is compared with the voltage anticipated from calculations for the voltage level to be activated, and from this a switching delay is determined, as is the switching time-point for a switching element (T₁, ..., T₂ₙ) to be closed, such that at this switching time-point the voltage at the switching element (T₁, ..., T₂ₙ) to be closed is zero or near-zero.

13. The method with zero-current switching in accordance with Claim 11,
**characterised in that**,
the current flowing through the half-bridge is measured with a sufficiently high resolution by means of a current measurement device (M₃) on the central terminal, or by means of a current measurement device (M₁; M₂) arranged on one of the ends of the two half-bridge branches (Z1, Z2) leading to the terminals (A₁, A₂), such that the current profile through each switching element (T₁, ..., T₂ₙ) is thereby known, wherein
from this current profile a switching delay is determined, as is the switching time-point for the switching element (T₁, ..., T₂ₙ) to be opened, with resonant or intermittent operation, or at the threshold to intermittent operation, such that at this switching time-point the current at the switching element (T₁, ..., T₂ₙ) to be opened is zero or near-zero.

14. The method with zero-voltage and/or zero-current switching in accordance with one of the Claims 11 - 13,
**characterised in that**,
from the voltage and/or current values measured in a particular time-wise raster a voltage and/or current profile close to reality is determined by way of calculation using interpolation, average value formation, and/or (fast) Fourier transformation, and
the voltage and/or current profile is used to determine the switching delay and the switching time-point of the switching element (T₁, ..., T₂ₙ) to be switched.

15. The method in accordance with Claim 11,
**characterised in that**,
the voltage and/or current profile on the switching elements (T₁, ..., T₂ₙ) to be switched is calculated taking into account known, and, where applicable, parasitic, inductance and/or capacitance values and the known voltage level,
and **in that**
the voltage and/or current profile is used to determine the switching delay and the switching time-point of the switching element (T₁, ..., T₂ₙ) to be switched, wherein
optionally the influence of temperature and/or stress on the acting inductance and capacitance values is taken into account by way of calculation.

16. The method in accordance with Claim 11, **characterised in that**,
the switching delay, necessary for zero-voltage switching and/or zero-current switching, for the switching elements (T₁, ..., T₂ₙ) to be switched is permanently prescribed in the circuit,
and in particular, either by means of circuitry technology, or by means of lodgement in a storage element, either integrated into the circuit, or connected with the circuit, wherein
the switching delay is optionally prescribed taking into account the influence of the bridge voltage, individual capacitor voltages, or a plurality of capacitor voltages, the current on the terminals of the half-bridge, and/or the temperatures of the relevant components, by means of a table of values, in which the values that are functions of these influence parameters are lodged for the purpose of controlling the switching delays for the opening and/or closing of the switching elements (T₁, ..., T₂ₙ) .

17. An electrical circuit in the form of a multilevel half-bridge (MLHB), wherein
the circuit connects two terminals (A₁, A₂), across which is applied a bridge voltage (U_{Br}), via two branches (Z1, Z2), meeting at a central terminal (M), wherein
on the central terminal (M) a central voltage (U_{M}) is applied against the potential of one of the terminals (A₂), wherein
the branches (Z1, Z2), which are designed symmetrically with respect to the central terminal (M), in each case have a number n of switching elements (T₁, ..., Tₙ, Tₙ₊₁, ...., T₂ₙ) connected in series, wherein
the connecting points (Vᵢ; i∈{1,..., n-1}) between each pair of adjacent switching elements (Tᵢ, Tᵢ₊₁) of the first branch (Z1) are connected in each case via a capacitance (Cᵢ) with the connecting points (Vₙ₊ᵢ), located symmetrically with respect to the central terminal (M), between each pair of switching elements (Tₙ₊ᵢ • Tₙ₊ᵢ₊₁) of the second branch, and wherein
the switching elements (T₁, ..., T₂ₙ) can be switched into various switching states (Zᵢ) with the aid of a control unit,
**characterised in that**,
the circuit, in particular its control unit, is set up for the execution of a method for a plurality of methods in accordance with the Claims 1 - 16.

18. The multilevel half-bridge (MLHB) in accordance with Claim 17, with an inductance (L) connected to the central terminal (M), wherein
this arrangement
- is operated as a step-down converter, in that an input voltage is supplied as a bridge voltage (U_{Br}) to the outer terminals (A₁, A₂) of the half-bridge and is abstracted as a smaller output voltage (U_{A}) from the second terminal of the inductance, which is not connected with the half-bridge, or
- is operated as a step-up converter, in that an input voltage (U_{E}) is supplied to the second terminal of the inductance, which is not connected with the half-bridge, and a larger output voltage (U_{Br}) is abstracted from the outer terminals (A₁, A₂) of the half-bridge, or
- is operated as an inverter, in that an input voltage (U_{E}) is abstracted from one of the two outer terminals (A₁, A₂) of the half-bridge, and on the other of the outer terminals (A₁, A₂) an output voltage (U_{A}) is abstracted with a reversed polarity to that of the input voltage.

19. A system comprising two multilevel half-bridges (MLHB1, MLHB2) in accordance with Claim 17, **characterised in that**,
the two multilevel half-bridges (MLHB1, MLHB2) are connected via their respective central terminals (M) with a common inductance (L), wherein
both multilevel half-bridges (MLHB1, MLHB2) can be operated as step-up or step-down converters, such that the system can be deployed as a bi-directional step-up and step-down converter for purposes of converting variable input voltages (U₁; U₂) into variable output voltages (U₂; U₁) .

20. A system comprising a multiplicity of multilevel half-bridges (MLHB) in accordance with Claim 17,
**characterised in that**,
the multilevel half-bridges (MLHB1, MLHB2, ..., MLHBm) are connected in parallel, such that their respective terminals (A₁, A₂) are acted upon by a common bridge voltage (U_{Br}), and such that their respective central terminals (M) are connected in each case via an inductance (L) with a common central terminal (M_{G}),
and **in that**
the individual multilevel half-bridges (MLHB1, MLHB2, ..., MLHBm) are set up for phase-displaced operation, in which the phase displacement between each pair of consecutive multilevel half-bridges (MLHB1, MLHB2, ..., MLHBm) is preferably 360°/m in each case, wherein
m is the number of multilevel half-bridges (MLHB1, MLHB2, ..., MLHBm).

21. A system comprising one multilevel half-bridge (MLHB) in accordance with Claim 17, and a simple half-bridge (HB) comprising two switching elements,
**characterised in that**,
the multilevel half-bridge (MLHB) and the simple half-bridge (HB) are connected together to form a full bridge.

22. A system comprising a multiplicity of multilevel half-bridges (MLHB) in accordance with Claim 17, and a simple half-bridge (HB) comprising two switching elements,
**characterised in that**,
the said multilevel half-bridges (MLHB1, ..., MLHBm) form a system in accordance with Claim 20, which for its part is connected with the simple half-bridge (HB) to form a full bridge.

23. A system comprising two multilevel half-bridges (MLHB1, MLHB2) in accordance with Claim 17,
**characterised in that**,
the two multilevel half-bridges (MLHB1, MLHB2) are connected together to form a full bridge and are set up for anti-phase operation, such that on average the half-bridge voltage (U_{Br}) is always applied on the two central terminals (M1, M2).

24. A system comprising a multiplicity of multilevel half-bridges (MLHB) in accordance with Claim 17, connected together to form a full bridge,
**characterised in that**,
on both sides of the full bridge in each case a multiplicity of multilevel half-bridges (MLHB_{Ai}; MLHB_{Bi}) are connected together in parallel such that all multilevel half-bridges (MLHB_{Ai}; MLHB_{B}i) are connected to a common bridge voltage (U₁), wherein
the central terminals (M_{Ai}; M_{Bi}) of the multilevel half-bridges (MLHB_{Ai} ; MLHB_{Bi}) arranged in each case on one side of the full bridge, are connected in each case via an inductance to a common central terminal (M_{A}; M_{B}) , such that a voltage (U₂) is applied between the central terminals (M_{A}; M_{B}) of the two sides of the full bridge, wherein
the individual multilevel half-bridges (MLHB_{Ai}; MLHB_{Bi}) are set up for phase-displaced operation, in which the phase displacement between each pair of consecutive multilevel half-bridges (MLHB_{Ai}; MLHB_{Bi}) on each side of the full bridge is preferably 360°/m in each case, wherein
m is the number of multilevel half-bridges (MLHB_{Ai}; MLHB_{Bi}) , and wherein
the multilevel half-bridges (MLHB_{Ai}; MLHB_{Bi}) arranged on different sides of the full bridge are set up for anti-phase operation, such that on average the half-bridge voltage (U₁) is always applied on the two central terminals (M_{A}; M_{B}).

25. A system comprising three multilevel half-bridges (MLHB1, MLHB2, MLHB3) in accordance with Claim 17, connected together to form a multilevel AC-bridge
**characterised in that**,
the three multilevel half-bridges (MLHB1, MLHB2, MLHB3) are connected together in parallel such that all the multilevel half-bridges (MLHB1, MLHB2, MLHB3) are connected to a common bridge voltage (U_{Br}), wherein
the three multilevel half-bridges (MLHB1, MLHB2, MLHB3) are operated with a phase displacement of 120° in each case, and wherein
the central terminals (M) of the three multilevel half-bridges (MLHB1, MLHB2, MLHB3) activate one of three AC-terminals (D₁, D₂, D₃) in each case.

26. A system comprising three systems (MLHB1, MLHB2, MLHB3) connected together to form a multilevel AC-bridge in accordance with Claim 20, in each case comprising a multiplicity of multilevel half-bridges (MLHB) in accordance with Claim 17,
**characterised in that**,
the three systems (MLHB1, MLHB2, MLHB3) are connected together in parallel such that all the systems (MLHB1, MLHB2, MLHB3) are connected to a common bridge voltage (U_{Br}) , wherein
the three systems (MLHB1, MLHB2, MLHB3) are operated with a phase displacement of 120° relative to one another in each case, and wherein
the central terminals (M) of the three systems (MLHB1, MLHB2, MLHB3) activate one of three AC-terminals (D₁, D₂ , D₃) in each case.

27. A multilevel DC/AC-converter system,
**characterised in that**,
on the DC-side (DC) one or a plurality of multilevel half-bridges (MLHB_{G1}, ... , MLHB_{Gx}), functioning as step-up converters in accordance with Claim 18, are connected in parallel, in each case with a central terminal (M) located at DC-potential (U_{DC}), wherein
the DC-side multilevel half-bridges (MLHB_{G1}, ... , MLHB_{Gx}), in the event that a plurality of DC-side multilevel half-bridges are used, are set up for phase-displaced operation in the sense of Claim 20,
and **in that**
on the AC-side (AC) one or a plurality of multilevel half-bridges (MLHB_{W1}, ... , MLHB_{Wx}), functioning as step-down converters in accordance with Claim 18, are connected together such that the same intermediate circuit voltage (U_{ZK}) is applied to their terminals (A₁, A₂) in each case, and such that their central terminal (M) is located at an AC-potential (U_{Ph1}, U_{Ph2}, U_{Ph3}) , wherein
the intermediate circuit voltage (U_{ZK}) corresponds to the bridge voltage of the DC-side multilevel half-bridges (MLHB_{G1}, ..., MLHB_{Gx}), wherein
in the event that a plurality of AC-side multilevel half-bridges (MLHB_{W1}, ..., MLHB_{Wx}) are used, these are connected together as multilevel AC-bridges in the sense of Claims 24 or 25, and are set up for correspondingly phase-displaced operation, and wherein
optionally, if required, an AC-side null point (N) for the AC-potentials (U_{Ph1}, U_{Ph2}, U_{Ph3}) is preferably formed by connecting two capacitors in series at the intermediate circuit voltage (U_{ZK}) and by connecting with the point connecting these two capacitors.

28. Use of an electrical circuit in the form of a multilevel half-bridge (MLHB) in accordance with Claim 17 in an engine controller, a converter or inverter, a power network component, a DC/DC-converter, or in a charging application.

## Revendications

1. Procédé de mise en oeuvre d'un circuit électrique du type demi-pont à niveaux multiples (MLHB),
dans lequel le circuit présente une connexion de deux bornes (A₁, A₂), auxquelles est appliquée une tension de pont (U_{Br}), par l'intermédiaire de deux branches (Z1, Z2) convergeant au niveau d'une borne centrale (M),
dans lequel une moyenne tension (U_{M}) par rapport au potentiel d'une des bornes (A₁, A₂) est appliquée à la borne centrale (M),
dans lequel les branches (Z1, Z2) réalisées en symétrie par rapport à la borne centrale (M) présentent respectivement un nombre n d'éléments de commutation (T₁, ..., Tₙ ; Tₙ₊₁, ..., T₂ₙ) connectés en série,
dans lequel les jonctions (V₁ ; i ∈ {1, ..., n-1}) sont reliées entre respectivement deux éléments de commutation (Tᵢ, Tᵢ₊₁) adjacents de la première branche (Z1) respectivement par l'intermédiaire d'un condensateur (Ci) aux jonctions (Vₙ₊ᵢ) situées en symétrie par rapport à la borne centrale (M) entre respectivement deux éléments de commutation (Tₙ₊ᵢ, Tₙ₊ᵢ₊₁) de la deuxième branche, et
dans lequel les éléments de commutation (T₁, ..., T₂ₙ) peuvent être commutés dans différents états de commutation (Zᵢ) à l'aide d'une unité de commande,
comprenant les étapes suivantes consistant à :
A) pour la tension de pont (U_{Br}) spécifiée, spécifier une moyenne tension (U_{M}) souhaitée, sélectionnée exclusivement parmi n+1 niveaux de tension différents (N) selon p fois la valeur de la partie n de la tension de pont (U_{M} = p/n x U_{Br}), où p est un entier avec 0 <= p <= n, ou pour la moyenne tension (U_{M}) spécifiée avec U_{M}≠0, spécifier une tension de pont (U_{Br}) souhaitée, sélectionnée exclusivement parmi n niveaux de tension différents selon n fois la valeur de la partie p de la moyenne tension (U_{Br} = n/p x U_{M}), où p est un entier avec 1 <= p <= n,
B) mettre en oeuvre le circuit en service normal tant que selon l'étape A) aucune nouvelle moyenne tension (U_{M}) ni aucune nouvelle tension de pont (U_{Br}) n'est sélectionnée parmi lesdits niveaux de tension, dans lequel, en service normal,
- initialement, tous les condensateurs (Ci) sont chargés à un multiple entier de la partie n de la tension de pont (U_{Br}) de sorte que la tension U_{Ci} prend la valeur U_{Ci} = i/n x U_{Br} à chaque condensateur (Cᵢ),
- chaque élément de commutation (T₁, ..., T₂ₙ) à l'état ouvert est exposé respectivement à la partie n de la tension de pont (U_{Br}), et
- la moyenne tension (U_{M}) souhaitée ou la tension de pont (U_{Br}) souhaitée, sauf pour les cas U_{M} = 0 ou U_{M} = U_{Br}, est maintenue par la réalisation d'une séquence groupée par cycles de commutation de différents états de commutation (Zᵢ) des éléments de commutation (T₁, ..., T₂ₙ) fournissant respectivement la moyenne tension (U_{M}) souhaitée ou la tension de pont (U_{Br}) souhaitée,
chaque cycle de commutation comprenant un nombre spécifié d'états de commutation (Zᵢ) différents qui, pour une résistance de charge constante au niveau du demi-pont à niveaux multiples (MLHB), présentent respectivement la même durée et fréquence d'activité et sont sélectionnés de telle sorte que dans chaque cycle de commutation, chaque condensateur (C₁, ..., Cₙ₋₁) est chargé et déchargé pendant la même durée et à la même fréquence,
**caractérisé en ce qu'**en cas de changement entre deux niveaux de tension voisins de la moyenne tension (U_{M}) ou de la tension de pont (U_{Br}), le premier état de commutation (Zᵢ) à régler pour le nouveau niveau de tension est sélectionné en fonction de l'état de commutation (Zᵢ) réglé précédemment pour l'autre niveau de tension de telle sorte qu'en cas de changement entre lesdits états de commutation, respectivement un seul élément de commutation (T₁, ..., Tₙ ; ,Tₙ₊₁...., T₂ₙ) est commuté pour chaque branche (Z1, Z2).

2. Procédé selon la revendication 1, **caractérisé en ce qu'**à l'étape B), pour chaque niveau de tension spécifié de la moyenne tension (U_{M}) ou de la tension de pont (U_{Br}) , excepté pour U_{M} = 0 et U_{M} = U_{Br}, chaque cycle de commutation comprend exactement n états de commutation qui sont sélectionnés de telle sorte
que pour une résistance de charge constante à la sortie centrale dans chaque cycle de commutation, chaque condensateur (C₁, ..., Cₙ₋₁) est chargé et déchargé exactement une seule fois, et que dans chaque état de commutation d'un cycle de commutation, respectivement au maximum deux condensateurs sont chargés et/ou déchargés en même temps.

3. Procédé selon la revendication 1 ou 2, **caractérisé en ce que** l'ordre des états de commutation (Zᵢ) à l'intérieur d'un cycle de commutation est sélectionné de telle sorte qu'en cas de changement entre deux états de commutation (Zᵢ) consécutifs d'un niveau de tension, respectivement seulement deux éléments de commutation (T₁, ..., Tₙ ; , Tₙ₊₁, ..., T₂ₙ) au maximum sont enclenchés et/ou déclenchés pour chaque branche (Z1, Z2).

4. Procédé selon l'une quelconque des revendications 1 à 3, **caractérisé en ce qu'**en cas d'alternance répété entre deux niveaux de tension voisins, respectivement un élément de commutation (T₁, ..., T₂ₙ) autre que lors du changement précédent est commuté pour chaque branche (Z1, Z2).

5. Procédé selon l'une quelconque des revendications 1 à 4, **caractérisé en ce qu'**à l'étape B), dans chaque cycle de commutation prévu pour un certain niveau de tension, les états de commutation (Z₁, ..., Zₙ) dépendant de la moyenne tension (U_{M}) choisie ou de la tension de pont (U_{Br}) choisie, sont utilisés dans l'ordre selon la table de la figure 2.

6. Procédé selon la revendication 5, **caractérisé en ce que** pour l'alternance entre respectivement deux niveaux de tension voisins, respectivement un seul élément de commutation (T₁, ... T₂ₙ) est commuté pour chaque branche (Z1, Z2), dans lequel
- soit lors du passage au niveau de tension supérieur le plus proche, l'état de commutation (Zᵢ) est maintenu, et lors du passage au niveau de tension inférieur le plus proche, l'état de commutation est augmenté d'une unité à l'état de commutation (Zᵢ₊₁), (Zₙ₊₁) étant défini par (Z₁),
- soit lors du passage au niveau de tension supérieur le plus proche, l'état de commutation (Zᵢ) est diminué d'une unité à l'état de commutation (Zᵢ₋₁), (Z₀) étant défini par (Zₙ), et lors du passage au niveau de commutation inférieur le plus proche, l'état de commutation (Zᵢ) est maintenu.

7. Procédé selon l'une quelconque des revendications 1 à 6, **caractérisé en ce qu'**à l'étape B), pendant les différents états de commutation (Zᵢ) d'un cycle de tension, respectivement la tension de pont (U_{Br}) exacte et la moyenne tension (U_{M}) exacte sont mesurées, et après le passage par n-1 états de commutation (Zᵢ) différents, toutes les tensions de condensateur (U_{Ci}) sont calculées sur cette base à l'aide d'un système d'équations linéaires.

8. Procédé selon la revendication 7, **caractérisé**
**en ce que** le courant passant par le demi-pont est mesuré au moyen d'un dispositif de mesure de courant (M₃) à la borne centrale ou respectivement d'un dispositif de mesure de courant (M₁ ; M₂) disposé aux extrémités des deux branches de demi-pont (Z1, Z2) menant aux bornes (A₁, A₂), et
**en ce que** les inversions de charge de condensateur sont calculées sur cette base pendant un cycle de commutation par intégration discrète (ΔU = I/C x Δt).

9. Procédé selon l'une quelconque des revendications 7 ou 8, **caractérisé en ce que** les valeurs calculées pour les tensions de condensateur (U_{Ci}) et/ou les valeurs calculées pour les inversions de charge de condensateur, en cas d'écart par rapport aux valeurs nominales (U_{Ci} = i/n x U_{Br}), sont utilisées pour une modification adaptative de l'ordre et/ou de la durée des états de commutation (Zᵢ).

10. Procédé selon l'une quelconque des revendications 1 à 9, **caractérisé en ce qu'**en parallèle aux éléments de commutation (T₁, ..., T₂ₙ), des résistances de compensation (R₁, ..., R₂ₙ), des varistances ou des éléments de circuit actifs sont disposés de telle sorte qu'une charge substantiellement homogène des condensateurs (C₁, ..., Cₙ₋₁) et une répartition de la tension de coupure appliquée aux éléments de commutation (T₁, ..., T₂ₙ) individuel sont atteintes lorsque l'élément de commutation (T₁, ..., T₂ₙ) est ouvert,
dans lequel, de préférence en cas d'arrivée d'une tension de pont (U_{Br}) donnée, un circuit de démarrage A est disposé entre le demi-pont formé par les éléments de commutation (T₁, ..., T₂ₙ) et la tension de pont (U_{Br}) donnée, et/ou en cas d'arrivée d'une tension de borne centrale (U_{M}) donnée, un circuit de démarrage B est disposé entre la borne centrale (M) du demi-pont et la moyenne tension (U_{M}) donnée, par lesquels le demi-pont à niveaux multiples est amené lentement ou progressivement jusqu'à la tension de service afin d'éviter un dépassement de la tension de coupure admissible au niveau des éléments de commutation, en particulier des éléments de commutation extérieurs Tₙ et T₂ₙ.

11. Procédé selon l'une quelconque des revendications 1 à 10, **caractérisé en ce qu'**un enclenchement à tension nulle (« zero voltage switching ») et/ou un déclenchement à courant nul (« zero current switching ») des éléments de commutation (T₁, ..., T₂ₙ) est/sont réalisé(s) **en ce qu'**en particulier, avec utilisation de capacités parasites et/ou introduites de manière ciblée en conjonction avec une inductance et/ou une inductance de fuite parasite connectée(s) à la borne centrale (M),
- l'instant de commutation pour la fermeture des éléments de commutation (T₁, ..., T₂ₙ) est sélectionné de telle sorte qu'à cet instant, la tension au niveau de l'élément de commutation à fermer est égale à zéro ou proche de zéro, diminuant ainsi les pertes capacitives d'enclenchement, et/ou
- l'instant de commutation pour l'ouverture des éléments de commutation (T₁, ..., T₂ₙ) est sélectionné en fonctionnement résonant ou lacunaire ou à la limite d'un fonctionnement lacunaire de telle sorte qu'à cet instant, le courant au niveau de l'élément de commutation à ouvrir est proche de zéro, empêchant ainsi des pertes ohmiques de déclenchement.

12. Procédé à enclenchement à tension nulle selon la revendication 11, **caractérisé en ce qu'**à l'ouverture d'un élément de commutation (T₁, ..., T₂ₙ) précédemment fermé, la courbe de la moyenne tension (U_{M}) est mesurée avec une résolution temporelle suffisante, est comparée à la tension mathématiquement anticipée du niveau de tension à activer, et un retard de commutation ainsi qu'un instant de commutation pour un élément de commutation (T₁, ..., T₂ₙ) à fermer sont déterminés sur cette base de telle sorte qu'audit instant de commutation, la tension au niveau de l'élément de commutation (T₁, ..., T₂ₙ) est égale à zéro ou proche de zéro.

13. Procédé à enclenchement à courant nul selon la revendication 11, **caractérisé en ce que** le courant passant par le demi-pont est mesuré au moyen d'un dispositif de mesure de courant (M3) à la borne centrale ou respectivement d'un dispositif de mesure de courant (M1 ; M2) disposé aux extrémités des deux branches de demi-pont (Z1, Z2) menant aux bornes (A₁, A₂) avec une haute résolution telle qu'elle permet de connaître la courbe de courant à travers chaque élément de commutation (T₁, ..., T₂ₙ), dans lequel un retard de commutation et l'instant de commutation pour l'élément de commutation à ouvrir (T₁, ..., T₂ₙ) en cas de fonctionnement résonant ou lacunaire ou à la limite du fonctionnement lacunaire sont déterminés sur cette base de telle sorte qu'à cet instant de commutation, le courant au niveau de l'élément de commutation (T₁, ..., T₂ₙ) à ouvrir est égal à zéro ou proche de zéro.

14. Procédé à enclenchement à tension nulle et/ou à courant nul selon l'une quelconque des revendications 11 à 13, **caractérisé en ce qu'**à partir des valeurs de tension et/ou de courant mesurées dans une certaine grille temporelle, une courbe de tension et/ou une courbe de courant s'approchant de la réalité est/sont déterminée(s) mathématiquement par interpolation, calcul de moyenne et/ou transformation de Fourier (rapide), et
ladite courbe est utilisée pour déterminer le retard de commutation et l'instant de commutation de l'élément de commutation (T₁, ..., T₂ₙ) à commuter.

15. Procédé selon la revendication 11, **caractérisé en ce que** la courbe de tension et/ou de courant est/sont calculée(s) au niveau des éléments de commutation (T₁, ..., T₂ₙ) à commuter en tenant compte de valeurs d'inductance et/ou de capacité, de cas échéant parasite(s), connues et des niveaux de tension connus, et **en ce que** ladite courbe est utilisée pour déterminer le retard de commutation et l'instant de commutation de l'élément de commutation (T₁, ..., T₂ₙ) à commuter,
dans lequel en option, une prise en compte mathématique de l'influence de la température et/ou de la tension sur les valeurs d'inductance et de capacité actives est effectuée.

16. Procédé selon la revendication 11, **caractérisé en ce que** le retard de commutation nécessaire à l'enclenchement à tension nulle et/ou à l'enclenchement à courant nul pour les éléments de commutation (T₁, ..., T₂ₙ) à commuter est fixé dans le circuit,
notamment par la conception du circuit ou par stockage dans un élément de mémoire intégré dans le circuit ou relié au circuit,
dans lequel le retard de commutation est en option spécifié en tenant compte de l'influence de la tension de pont, de tensions de condensateur individuelles ou multiples, du courant aux bornes du demi-pont et/ou de la température des composants en question au moyen d'une table de valeurs dans laquelle sont stockées les valeurs dépendant de ces paramètres d'influence pour commander les retards de commutation pour l'ouverture et/ou la fermeture des éléments de commutation (T₁, ..., T₂ₙ).

17. Circuit électrique du type demi-pont à niveaux multiples (MLHB),
dans lequel le circuit présente une connexion de deux bornes (A₁, A₂), auxquelles est appliquée une tension de pont (U_{Br}), par l'intermédiaire de deux branches (Z1, Z2) convergeant au niveau d'une borne centrale (M),
dans lequel une moyenne tension (U_{M}) par rapport au potentiel d'une des bornes (A₁, A₂) est appliquée à la borne centrale (M),
dans lequel les branches (Z1, Z2) réalisées en symétrie par rapport à la borne centrale (M) présentent respectivement un nombre n d'éléments de commutation (T₁, ..., Tₙ ; Tₙ₊₁, ..., T₂ₙ) connectés en série,
dans lequel les jonctions (V₁ ; i ∈ {1, ..., n-1}) sont reliées entre respectivement deux éléments de commutation (Tᵢ, Tᵢ₊₁) adjacents de la première branche (Z1) respectivement par l'intermédiaire d'un condensateur (Ci) aux jonctions (Vₙ₊ᵢ) situées en symétrie par rapport à la borne centrale (M) entre respectivement deux éléments de commutation (Tₙ₊ᵢ, Tₙ₊ᵢ₊₁) de la deuxième branche, et
dans lequel les éléments de commutation (T₁, ..., T₂ₙ) peuvent être commutés dans différents états de commutation (Zᵢ) à l'aide d'une unité de commande,
**caractérisé en ce que** le circuit, en particulier son unité de commande, est agencé par l'exécution d'un procédé ou de plusieurs procédés selon les revendications 1 à 16.

18. Demi-pont à niveaux multiples (MLHB) selon la revendication 17, comprenant une inductance (L) connectée à la borne centrale (M), ledit agencement étant mis en oeuvre
- comme convertisseur abaisseur en ce qu'une tension d'entrée est amenée en tant que tension de pont (U_{Br}) au niveau des bornes extérieures (A₁, A₂) du demi-pont et une tension de sortie (U_{A}) inférieure est prélevée au niveau de la deuxième borne de l'inductance, non reliée au demi-pont, ou
- comme convertisseur élévateur en ce qu'une tension d'entrée (U_{E}) est amenée au niveau de la deuxième borne de l'inductance, non reliée au demi-pont, et une tension de sortie (U_{A}) supérieure est prélevée au niveau des bornes extérieures (A₁, A₂) du demi-pont, ou
- comme inverseur en ce qu'au niveau de l'une des deux bornes extérieures (A₁, A₂) du demi-pont, une tension d'entrée (U_{E}) est prélevée et qu'au niveau de l'autre des bornes extérieures (A₁, A₂), une tension de sortie (U_{A}) est prélevée avec une polarité inversée par rapport à la tension d'entrée.

19. Système composé de deux demi-ponts à niveaux multiples (MLHB1, MLHB2) selon la revendication 17, **caractérisé en ce que** les deux demi-ponts à niveaux multiples (MLHB1, MLHB2) sont reliés par l'intermédiaire de leurs bornes centrales (M) respectives à une inductance commune (L), les deux demi-ponts à niveaux multiples (MLHB1, MLHB2) pouvant être mis en oeuvre comme convertisseurs élévateurs ou abaisseurs de sorte que le système peut être utilisé comme convertisseur élévateur et abaisseur bidirectionnel pour convertir des tensions d'entrée (U₁ ; U₂) variables en tensions de sortie (U₂ ; U₁) variables.

20. Système composé d'une pluralité de demi-ponts à niveaux multiples (MLHB) selon la revendication 17, **caractérisé**
**en ce que** les demi-ponts à niveaux multiples (MLHB1, MLHB2, ..., MLHBm) sont connectés en parallèle de telle sorte que leurs bornes respectives (A₁, A₂) sont sollicitées par une tension de pont (U_{Br}) commune et en ce que leurs bornes centrales (M) respectives sont reliées respectivement par une inductance (L) à une borne centrale (M_{G}) commune, et
**en ce que** les demi-ponts à niveaux multiples (MLHB1, MLHB2, ..., MLHBm) individuels sont aménagés pour un fonctionnement en décalage de phase dans lequel le décalage de phase entre respectivement deux demi-ponts (MLHB1, MLHB2, ..., MLBHm) consécutifs est de préférence respectivement de 360°/m, où m est le nombre de demi-ponts à niveaux multiples (MLHB1, MLHB2, ..., MLHBm).

21. Système composé d'un demi-pont à niveaux multiples (MLHB) selon la revendication 17 et d'un demi-pont simple (HB) comprenant deux éléments de commutation, **caractérisé en ce que** le demi-pont à niveaux multiples (MLHB) et le demi-pont simple (HB) sont connectés en pont intégral.

22. Système composé d'une pluralité de demi-ponts à niveaux multiples (MLHB) selon la revendication 17 et d'un demi-pont simple (HB), comprenant deux éléments de commutation, **caractérisé en ce que** ces demi-ponts à niveaux multiples (MLHB1, ..., MLHBm) forment un système selon la revendication 20 qui est à son tour connecté en pont intégral avec le demi-pont simple (HB).

23. Système composé de deux demi-ponts à niveaux multiples (MLHB1, MLHB2) selon la revendication 17, **caractérisé en ce que** les deux demi-ponts à niveaux multiples (MLHB1, MLHB2) sont connectés en pont intégral et agencés pour un fonctionnement en opposition de phase de sorte qu'en moyenne la moitié de la tension de pont (U_{Br}) est toujours appliquée aux deux bornes centrales (M1, M2).

24. Système composé d'une pluralité de demi-ponts à niveaux multiples selon la revendication 17 connectés en pont intégral, **caractérisé en ce que** des deux côtés du pont intégral, respectivement une pluralité de demi-ponts à niveaux multiples (MLHB_{Ai} ; MLHB_{Bi}) sont connectés en parallèle de telle sorte que tous les demi-ponts à niveaux multiples (MLHB_{Ai} ; MLHB_{Bi}) sont connectés à une tension de pont (U₁) commune, dans lequel les bornes centrales (M_{Ai} ; M_{Bi}) des demi-ponts à niveaux multiples (MLHB_{Ai} ; MLHB_{Bi}) disposés de chaque côté du pont intégral sont connectés respectivement par une inductance à une borne centrale (M_{A} ; M_{B}) de telle sorte qu'une tension (U₂) est appliquée entre les bornes centrales (M_{A} ; M_{B}) des deux côtés du pont intégral,
dans lequel les demi-ponts à niveaux multiples (MLHB_{Ai} ; MLHB_{Bi}) individuels sont agencés pour un fonctionnement en décalage de phase, dans lequel le décalage de phase entre respectivement deux demi-ponts à niveaux multiples (MLHB_{Ai} ; MLHB_{Bi}) consécutifs de chaque côté du pont intégral est de préférence respectivement de 360°/m, où m est le nombre respectif de demi-ponts à niveaux multiples (MLHB_{Ai} ; MLHB_{Bi}), et dans lequel les demi-ponts à niveaux multiples (MLHB_{Ai} ; MLHB_{Bi}) disposés sur différents côtés du pont intégral sont agencés pour un fonctionnement en opposition de phase de sorte que la moitié de la tension de pont (U₁) est toujours appliquée aux deux bornes centrales (M_{A} ; M_{B}).

25. Système composé de trois demi-ponts à niveaux multiples (MLHB1, MLHB2, MLHB3) selon la revendication 17 connectés en pont triphasé à niveaux multiples, **caractérisé en ce que** les trois demi-ponts à niveaux multiples (MLHB1, MLHB2, MLHB3) sont connectés en parallèle de telle sorte que tous les demi-ponts à niveaux multiples (MLHB1, MLHB2, MLHB3) sont connectés à une tension de pont (U_{Br}) commune, dans lequel les trois demi-ponts à niveaux multiples (MLHB1, MLHB2, MLHB3) sont mis en oeuvre avec un décalage de phase de respectivement 120°, et dans lequel les bornes centrales (M) des demi-ponts à niveaux multiples (MLHB1, MLHB2, MLHB3) excitent respectivement l'une de trois bornes triphasées (D₁, D₂, D₃).

26. Système composé de trois demi-ponts à niveaux multiples (MLHBS1 ; MLHBS2 ; MLHBS3) selon la revendication 20 connectés en pont triphasé à niveaux multiples, composés respectivement d'une pluralité de demi-ponts à niveaux multiples (MLHB) selon la revendication 17, **caractérisé en ce que** les trois systèmes (MLHBS1 ; MLHBS2 ; MLHBS3) sont connectés en parallèle de telle sorte que tous les systèmes (MLHBS1 ; MLHBS2 ; MLHBS3) sont connectés à une tension de pont (U_{Br}) commune, dans lequel les trois systèmes (MLHBS1 ; MLHBS2 ; MLHBS3) sont mis en oeuvre les uns par rapport aux autres avec un décalage de phase de 120° respectivement, et dans lequel les bornes centrales (M) des trois systèmes (MLHBS1 ; MLHBS2 ; MLHBS3) excitent respectivement l'une de trois bornes triphasées (D₁, D₂, D₃) .

27. Système de convertisseur DC/AC à niveaux multiples, **caractérisé**
**en ce que** du côté du courant continu (DC), un ou plusieurs demi-ponts à niveaux multiples (MLHB_{G1}, ..., MLHB_{GX}) servant de convertisseurs élévateurs selon la revendication 18 sont connectés en parallèle respectivement à une borne centrale (M) au potentiel de courant continu (U_{DC}), dans lequel les demi-ponts à niveaux multiples (MLHB_{G1}, ..., MLHB_{GX}), en cas d'utilisation de plusieurs demi-ponts à niveaux multiples côté courant continu, sont agencés pour un fonctionnement en décalage de phase selon la revendication 20, et
**en ce que** du côté du courant alternatif (AC), un ou plusieurs demi-ponts à niveaux multiples (MLHB_{W1}, ..., MLHB_{WX}) servant de convertisseurs abaisseurs selon la revendication 18 sont connectés de telle sorte que leurs bornes (A₁, A₂) sont respectivement sollicitées par la même tension intermédiaire (U_{ZK}), et que leur borne centrale (M) se trouve à un potentiel de tension alternative (U_{Ph1}, U_{Ph2}, U_{Ph3}), dans lequel la tension intermédiaire (U_{ZK}) correspond à la tension de pont des demi-ponts à niveaux multiples (MLHB_{G1}, ..., MLHB_{GX}) du côté du courant continu, dans lequel en cas d'utilisation de plusieurs demi-ponts à niveaux multiples (MLHB_{W1}, ..., MLH_{WX}) du côté du courant alternatif, ces demi-ponts à niveaux multiples sont connectés selon la revendication 24 ou 25 et agencés pour un fonctionnement en décalage de phase de manière correspondante, et dans lequel en option si nécessaire, un point neutre (N) du côté du courant alternatif est formé pour les potentiels de tension alternative (U_{Ph1}, U_{Ph2}, U_{Ph3}) de préférence par la connexion en série de deux condensateurs à la tension intermédiaire (U_{ZK}), et la connexion avec la jonction de ces deux condensateurs est formée.

28. Utilisation d'un circuit électrique du type demi-pont à niveaux multiples (MLHB) selon la revendication 17 dans une commande de moteur, un convertisseur ou onduleur, un bloc d'alimentation de puissance, un convertisseur DC/DC ou dans une application de charge.
